# EUROPEAN PATENT SPECIFICATION

(11) **EP 2 871 552 B1**
(45) Date of publication and mention of the grant of the patent: **03.10.2018**
(21) Application number: 13816587.3
(22) Date of filing: 15.05.2013
(51) Int. Cl.: G06F 1/32, G06F 1/26, H04M 1/00, H04W 52/02

(54) **INFORMATION PROCESSING TERMINAL**
INFORMATIONSVERARBEITUNGSENDGERÄT
TERMINAL DE TRAITEMENT D'INFORMATIONS

(30) Priority: 09.07.2012 JP 2012153558
(43) Date of publication of application: 13.05.2015
(73) Proprietor: NEC Corporation, Tokyo 108-8001 (JP)
(72) Inventor: TAKENAKA, Hidetoshi, Kodama-gun Saitama 367-0297 (JP)
(74) Representative: Vossius & Partner Patentanwälte Rechtsanwälte mbB
(86) International application number: PCT/JP2013/003087
(87) International publication number: WO 2014/010160

(56) References cited:
- DE-A1- 10 155 044
- JP-A- 2004 021 476
- JP-A- 2005 295 399
- JP-A- 2005 354 544
- JP-A- 2011 096 271
- JP-A- 2011 221 948
- US-A1- 2006 090 088
- US-A1- 2011 080 349
- US-A1- 2011 242 043

## Description

### TECHNICAL FIELD

The present invention relates to an information processing terminal. More specifically, the present invention relates to an information processing terminal which has a power save function to reduce power consumption.

### BACKGROUND ART

In recent years, mobile information processing terminals such as a mobile phone and a tablet PC (Personal Computer) have become capable of realizing various kinds of processing. Such information processing terminals often use a battery as a power supply, and the operation time of information processing terminals may become shorter due to increase of power consumption. Thus, techniques to reduce the power consumption of information processing terminals have been developed.

In one example of the techniques, in a case where an operation on an information processing terminal has not been conducted for a given time, the state is switched to a power save state where power consumption is less than in a normal running state, and, in a case where an operation on the information processing terminal is conducted in the power save state, the state is switched from the power save state to the running state (e.g., see Patent Document 1).

Patent Document 1: JP- 2005-202742 A

However, in the abovementioned technique, the state may switch from the power save state to the running state at the timing that is against the user's intention. For example, when the user carries an information processing terminal in a bag or the like, and the information processing terminal is brought to a state where an operation is conducted thereon because the information processing terminal comes in contact with another object in the bag, the state may switch from the power save state to the running state. Therefore, there is a problem that reduction of the power consumption of an information processing terminal cannot be achieved.

US 2006/090088 A1 relates to a method and apparatus for managing power of a portable information device.

US 2011/242043 A1 relates to a device having a touchscreen panel and method aimed at reducing power consumption.

US 2011/080349 A1 relates to a method of waking a portable electronic device.

### SUMMARY

Accordingly, an object of the present invention is to provide an information processing terminal which can solve the problem that reduction of the power consumption of an information processing terminal cannot be achieved.

In order to achieve the object, the present invention provides an apparatus according to claim 1 and according to claim 13, a method according to claim 15, and a computer program according to claim 16. Further aspects of the invention are outlined in the dependent claims. Embodiments which do not fall within the scope of the claims do not describe part of the present invention.

The present invention has a beneficial effect that it is possible to achieve reduction of the power consumption of an information processing terminal with the configurations as described above.

### BRIEF DESCRIPTION OF DRAWINGS

Fig. 1 is a block diagram showing the outline of the configuration of an information processing terminal according to a first exemplary embodiment of the present invention;
Figs. 2A and 2B are diagrams for describing the outline of the information processing terminal;
Fig. 3 is a circuit diagram for describing the configuration of the information processing terminal;
Fig. 4 is a block diagram showing the outline of another configuration of the information processing terminal;
Fig. 5 is a flowchart showing the operation of an operation detecting part;
Fig. 6 is a flowchart showing the operation of a main control part;
Fig. 7 is a flowchart showing the operation of the operation detecting part;
Fig. 8 is a block diagram showing the outline of the configuration of an information processing terminal according to a second exemplary embodiment of the present invention;
Fig. 9 is a flowchart showing the operation of an operation detecting part;
Fig. 10 is a flowchart showing the operation of a main control part;
Fig. 11 is a flowchart showing the operation of the main control part;
Fig. 12 is a flowchart showing the operation of an operation object detecting part;
Fig. 13 is a block diagram showing the outline of the configuration of an information processing terminal according to a third exemplary embodiment of the present invention;
Fig. 14 is a flowchart showing the operation of an operation detecting part;
Fig. 15 is a block diagram showing the outline of the configuration of an information processing terminal according to a fourth exemplary embodiment of the present invention;
Fig. 16 is a flowchart showing the operation of an operation detecting part; and
Fig. 17 is a flowchart showing the operation of a main control part.

### EXEMPLARY EMBODIMENTS

### <First Exemplary Embodiment>

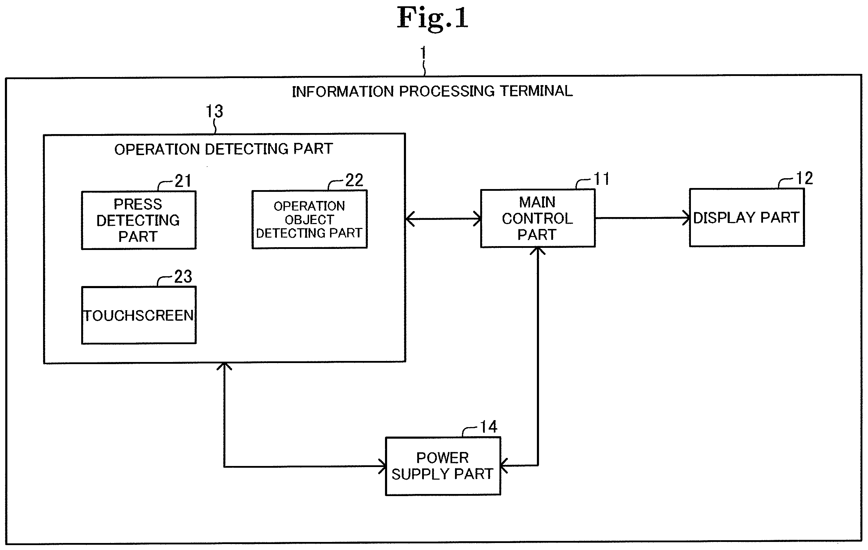

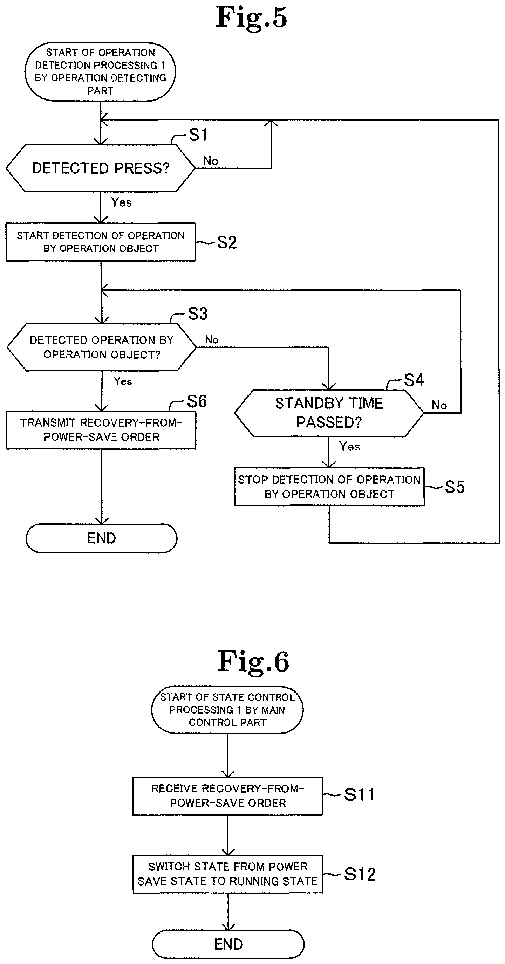

A first exemplary embodiment of the present invention will be described referring to Figs. 1 to 6. Figs. 1 to 4 are diagrams for describing the configuration of an information processing terminal. Figs. 5 and 6 are diagrams for describing the operation of the information processing terminal.

### [Configuration]

As shown in Fig. 1, an information processing terminal 1 according to this exemplary embodiment includes a main control part 11, a display part 12, an operation detecting part 13, and a power supply part 14. Moreover, the information processing terminal 1 includes components (not shown in the drawings), such as a storage part and a communication part, configuring the information processing terminal 1. The components are not limited to the abovementioned ones. For example, the display part 12 and so on can also be the components configuring the information processing terminal 1. The information processing terminal 1 is, for example, a smartphone, a tablet PC or the like that are mobile. The information processing terminal 1 has at least two states: a running state (a first electric power setting state of the information processing terminal 1) to perform a preset operation; and a power save state (a second electric power setting state) where power consumption is set to less than operation-time electric power (the maximum power consumption assumed in the running state).

The running state is a state where preset electric power is supplied to each of the components configuring the information processing terminal 1. The power save state is a state where smaller electric power than the maximum power consumption assumed in the running state is supplied to each of the components configuring the information processing terminal 1. The power save state is, for example: a sleep state where supply of electric power to the display part 12, a storage part (not shown in the drawings) like a hard disk drive, peripheral equipment and so on, which are part of the components configuring the information processing terminal 1, is stopped; and a suspend state where at least a main power supply is disconnected to make power consumption less than in the sleep state (i.e., a power save setting state). Moreover, the power save state can include, for example, a state where the power consumption of the components is reduced, such as luminance of the display part 12 as the component is reduced (electric power supplied to the display part is made to be less than electric power supplied to the display part in the running state) and display is turned off (supply of electric power to the display part is stopped). The power save state is not limited to the abovementioned one, and may be any state as far as power consumption is made to be less than in the running state.

Further, in the example described above, the first electric power setting state is the running state, and the power save state as the second electric power setting state is the sleep state and the suspend state, but the first and second electric power setting states are not limited to the abovementioned ones and can be any setting states as far as the second electric power setting state is a state where less electric power than the maximum power consumption in the first electric power setting state is supplied (i.e., the power save setting state). For example, the first electric power setting state and the second electric power setting state may be the sleep state and the suspend state, respectively.

Each of the components has a power save control part for reducing the power consumption of the component. For example, the power save control part of the storage part such as a HDD (Hard Disk Drive) spontaneously stops rotation of the disk to shift to the power save state (the power save state of the storage part) (i.e., execute power save control) in a case where there has not been access for a preset time, and starts rotation of the disk to shift to the running state (the running state of the storage part) (i.e., execute power save recovery) in a case where there is access. Thus, in the running state, the power consumption of the information processing terminal 1 may become equal to or less than preset maximum power consumption due to power save control by the components. Therefore, depending on the value of the maximum power consumption of each of the components and power save control by each of the components, the information processing terminal 1 may not be necessarily in a state where power consumption is larger in the first electric power setting state than in the second electric power setting state (first electric power setting state > second electric power setting state). However, this exemplary embodiment will be described assuming an effect of power save control by the components is small. When an effect of power save control by the components is small, the magnitude of electric power supplied in each of the power setting states (i.e., the setting of electric power) can be considered as the magnitude of the actual power consumption of the components operating in each of the power setting states.

Next, the configuration of the main control part 11 will be described. The main control part 11 includes a CPU, a memory, and an input/output interface (not shown in the drawings). Then, the CPU loads a program stored in the memory and the main control part 11 thereby controls the operation of the information processing terminal 1. In this exemplary embodiment, functions of the main control part 11 to control the operation of the information processing terminal 1 will be described together. However, these functions may be configured by separate function blocks. Moreover, these function blocks do not need to be housed in the same part necessarily. These functions may be configured separately as needed, or may be configured by different parts.

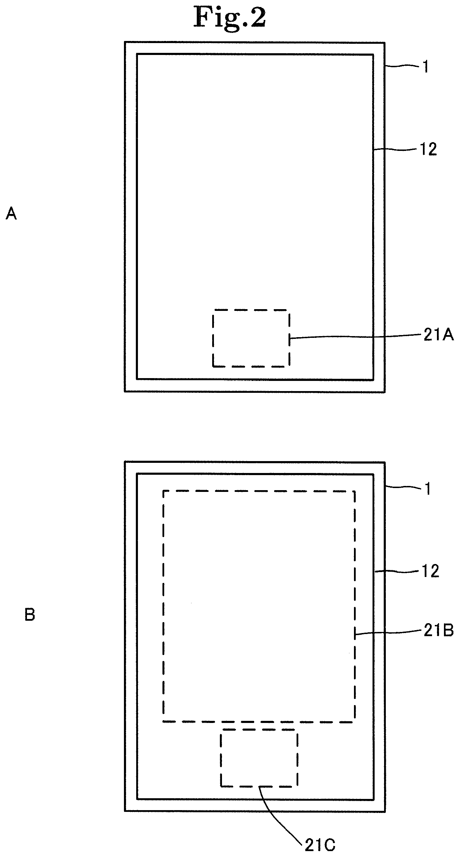

The main control part 11 controls activation of the display part 12 and display on the display part 12. For example, the main control part 11 displays various kinds of data such as characters and images on the display face of the display part 12. The display part 12 is formed by, for example, a liquid crystal display, an organic EL (Electroluminescence) display, or the like. Moreover, as shown by examples shown in Figs. 2A and 2B, the display part 12 is placed on the almost entire face on one side of the information processing terminal 1 so that a large display region can be secured. The display part 12 does not need to be the abovementioned configuration necessarily, and may be realized by any configuration.

Further, the main control part 11 (a state controlling means) controls switching between the two states (the running state and the power save state) of the information processing terminal 1. For example, in a case where a predetermined input operation is not accepted by a preset time in the running state, the main control part 11 switches the state from the running state to the power save state. Moreover, for example, in a case where, in the power save state, a predetermined input operation is accepted by the operation detecting part 13 (a press detecting part 21) and an operation by a preset operation object is detected by the operation detecting part 13 (an operation object detecting part 22), the main control part 11 switches the sate from the power save state to the running state. A predetermined input operation is, for example, a press operation which is pressing the display face of the display part 12. Moreover, an operation by a preset operation object is, for example, a contact operation on the display face by the user's finger (body). The details of the operation detecting part 13 will be described below.

The operation detecting part 13 includes the press detecting part 21, the operation object detecting part 22, and a touchscreen 23. In the power save state, the operation detecting part 13 accepts a predetermined input operation, and also detects an operation by a preset operation object. Moreover, in the running state, the operation detecting part 13 functions as an input interface.

The press detecting part 21 (an input operation accepting part), which is formed on the display face of the display part 12, detects a press on the display face and accepts a press operation of pressing the display face as an input operation. Because the press detecting part 21 detects a press on the display face even in the power save state, the press detecting part 21 is electrically connected with the power supply part 14 so as to be provided with electric power supply and is kept running at all times. For example, the press detecting part 21 includes two transparent electrodes which are arranged at a predetermined space. Then, the press detecting part 21 is formed by a switch which detects mutual contact of the two transparent electrodes and thereby detects a press by an operation object. It is needless to say that the press detecting part 21 does not need to be formed by a switch necessarily, and may be any one that can detect a press on the display face.

The press detecting part 21 may be formed on the entire display face of the display part 12, or may be formed on part of the display face. For example, as shown in Fig. 2A, the information processing terminal 1 may have a press detecting part 21A (a pressing switch) only in a partial region (shown by a dashed line) of the display face of the display part 12. Moreover, for example, as shown in Fig. 2B, the information processing terminal 1 may have two press detecting parts 21B and 21C (shown by dashed lines) in a region of the display face of the display part 12. In this case, when the state of the information processing terminal 1 is the power save state, it is enough that at least one (e.g., the press detecting part 21C) of the press detecting parts 21 is operating. Further, the number of the press detecting part 21 is not limited to two, and may be three or more. Furthermore, the press detecting part 21 may be configured to be capable of detecting a press on the display face in an area other than the display face. For example, the press detecting part 21 may be configured in a manner that a switch, which is placed between a transparent protection member covering the display part 12 and a casing or placed on the back side of the display part 12, operates to detect a press.

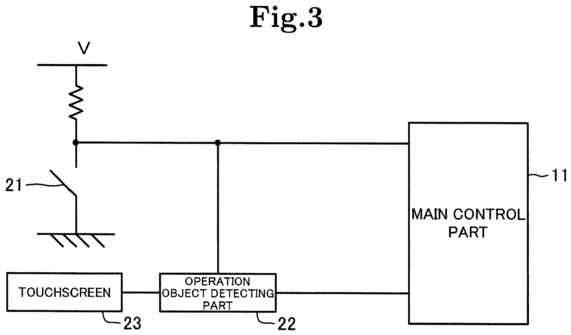

The operation object detecting part 22 (an operation object detecting part) has a function to detect an operation by a preset operation object. An operation by a preset operation object is, for example, a contact operation by an object which can be detected by the touchscreen 23, and will be described in detail later. Moreover, the operation object detecting part 22 has a function to monitor detection of a press by the press detecting part 21. In the power save state, the operation object detecting part 22 may be in a state where at least the function to monitor detection of a press by the press detecting part 21 works and the function to detect an operation by an operation object stops (the power save state of the operation object detecting part 22). An example of the function of the operation object detecting part 22 to monitor detection of a press by the press detecting part 21 will be described referring to Fig. 3.

Fig. 3 is a diagram showing the outline of the function to monitor detection of a press by the press detecting part 21. As shown in Fig. 3, when the press detecting part 21 configured by a switch is off (disconnected), the operation object detecting part 22 detects a predetermined driving voltage V supplied from the power supply part 14. In this state, when the press detecting part 21 shifts from the off state to an on state (a connected state), the operation object detecting part 22 is grounded, and therefore, the magnitude of voltage detected by the operation object detecting part 22 becomes 0. By detecting this voltage change (from the driving voltage V to 0 (GND)), the operation object detecting part 22 can detect that a predetermined input operation is conducted on the display face of the display part 12 (a press is detected by the press detecting part 21). The function to monitor detection of a press by the press detecting part 21 is not limited to the example shown in Fig. 3. It is needless to say that a configuration for notifying to the operation object detecting part 22 that the press detecting part 21 detects a press may be provided. In this case, the operation object detecting part 22 has a function to accept notification from the press detecting part 21, instead of the function to monitor detection of a press by the press detecting part 21.

The power supply part 14 may be configured to, when the press detecting part 21 is on (when the press detecting part 21 detects a press), change the voltage from the driving voltage V to the voltage 0 during a preset first period. Then, the power supply part 14 may be configured to, when the power supply part 14 changes the voltage from 0 to the driving voltage V during a preset second period and the magnitude of voltage detected by the operation object detecting part 22 is 0 (the press detecting part 21 is on), change the voltage from the driving voltage V to the voltage 0 again, whereas when the power supply part 14 changes the voltage from 0 to the driving voltage V and the magnitude of voltage detected by the operation object detecting part 22 is V (the press detecting part 21 is off), continue supplying the driving voltage V. Consequently, it is possible to reduce power consumption while a press is detected by the press detecting part 21. This is applicable to other exemplary embodiments to be described later.

Then, in a case where a press is detected by the press detecting part 21, the operation object detecting part 22 recovers from the power save state, and activates the function to detect an operation by an operation object and the touchscreen 23. Thus, the operation object detecting part 22 recovers from the power save state, and starts detection of an operation by an operation object by using the touchscreen 23.

By configuring the press detecting part 21 by a simple switch, the power consumption of the press detecting part 21 becomes zero in a not-pressed state. Even in a pressed state, in the case of a press by an operation object which is not previously set, the voltage becomes the driving voltage V. Thus, it is possible to easily reduce power consumption only by simple processing of controlling the driving voltage V, and detect the presence or absence of a press by an operation object.

The touchscreen 23 is, for example, a capacitive touchscreen, and is formed on the display face of the display part 12. The operation object detecting part 22 detects a contact operation by an operation object which can be detected by the touchscreen 23 and which has a characteristic of permitting the flow of electrical current (e.g., a human body, and a conductor). The touchscreen 23 is not limited to a capacitive type, and may be any configuration, such as a pen having a coil detecting by electromagnetic induction, that can detect a contact operation by a preset operation object. Moreover, an operation detected by the operation object detecting part 22 is not limited to a contact operation, and may be a proximity operation by an electromagnetic-induction-type pen, or the like.

Then, upon detecting an operation by an operation object by using the touchscreen 23, the operation object detecting part 22 transmits, to the main control part 11, a recovery-from-power-save order for switching the information processing terminal 1 from the power save state to the running state. On the other hand, when a press is detected by the press detecting part 21, detection of an operation by an operation object is started, and thereafter, a preset standby time passes by without detection of an operation by an operation object, the operation object detecting part 22 stops detection of an operation by an operation object, and returns to the power save state before the press is detected by the press detecting part 21.

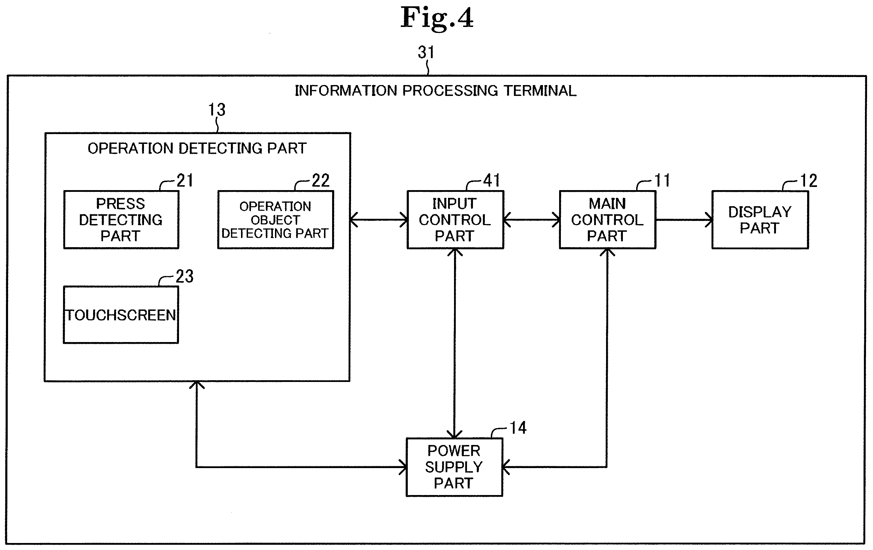

Part of the functions of the operation object detecting part 22 described above can be realized by another component (function block). For example, as shown by an information processing terminal 31 shown in Fig. 4, an input control part 41 may be added to the configuration of the information processing terminal 1, and the input control part 41 may execute part of the functions of the operation object detecting part 22. For example, the input control part 41 determines whether or not a preset standby time has passed by after detection of a press by the press detecting part 21, and the operation object detecting part 22 can transmit a recovery-from-power-save order to the main control part 61 when detecting an operation by an operation object before the standby time passes by. The input control part 41 can also be applied to other exemplary embodiments to be described later.

To be specific, the input control part 41 monitors detection of a press by the press detecting part 21. In the power save state, the input control part 41 may be in a state where at least the function to monitor detection of a press by the press detecting part 21 works and the function to detect an operation by an operation object stops (the power save state of the input control part 41). Then, in response to detection of a press by the press detecting part 21, the input control part 41 recovers from the power save state. Then, the input control part 41 determines whether or not a preset standby time has passed by after detection of the press by the press detecting part 21. Then, in a case where an operation by an operation object has not been detected by the operation object detecting part 22 before the preset standby time passes by, the input control part 41 transmits a shift-to-power-save order for switching the operation detecting part 13 to the power save state, to the operation detecting part 13. On the other hand, in a case where an operation by an operation object has been detected by the operation object detecting part 22 before the preset standby time passes by, the input control part 41 transmits a recovery-from-power-save order for switching the information processing terminal 1 from the power save state to the running state, to the main control part 11. Thus, by causing the input control part 41 to share part of the processing by the operation detecting part 13, it is possible to efficiently recover the state from the power save state to the running state.

The input control part 41 is not limited to the above configuration, and may be any configuration that transmits a recovery-from-power-save order to the main control part 11 when a press is detected by the press detecting part 21 and an operation by an operation object is detected by the operation object detecting part 22. For example, the input control part 41 may be configured by a latch circuit or a delay circuit.

### [Operation]

Next, referring to Figs. 5 to 7, the operation of the abovementioned information processing terminal 1 will be described in detail. It is assumed that in the example shown by Figs. 5 to 7, the state of the information processing terminal 1 is set to the power save state.

First, at step S1, the press detecting part 21 determines whether or not it has detected a press on the display face. In a case where the press detecting part 21 determines at step S1 that it has not detected a press (step S1: No), the processing returns to step S1 and the same process is repeated. On the other hand, in a case where the press detecting part 21 determines at step S1 that it has detected a press (step S1: Yes), at step S2, the operation object detecting part 22 starts detection of an operation by an operation object. In other words, the operation object detecting part 22 activates the touchscreen 23 and the function of the operation object detecting part 22 to detect an operation by an operation object, and recovers from the power save state.

Next, at step S3, the operation object detecting part 22 determines whether or not it has detected an operation by an operation object. For example, the operation object detecting part 22 determines whether or not an object having pressed the display face in the process at step S1 is a preset operation object (e.g., a human body). In a case where the operation object detecting part 22 determines at step S3 that it has not detected an operation by an operation object (step S3: No), at step S4, the operation object detecting part 22 determines whether or not a preset standby time has passed by since the detection of the press by the press detecting part 21. In a case where the operation object detecting part 22 determines at step S4 that the standby time has not passed by yet (step S4: No), the processing returns to step S3 and the processes therefrom are repeated. On the other hand, in a case where the operation object detecting part 22 determines at step S4 that the standby time has passed by (step S4: Yes), at step S5, the operation object detecting part 22 stops detection of an operation by an operation object. In other words, the operation object detecting part 22 stops the touchscreen 23 and the function of the operation object detecting part 22 to detect an operation by an operation object, and returns to the power save state. After the process at step S5, the processing returns to step S1 and the processes therefrom are repeated.

On the other hand, in a case where the operation object detecting part 22 determines at step S3 that it has detected an operation by an operation object (step S3: Yes), at step S6, the operation object detecting part 22 transmits a recovery-from-power-save order to the main control part 11. After the process at step S6 is executed, operation detection processing 1 ends.

Next, at step S11 in Fig. 6, the main control part 11 receives the recovery-from-power-save order transmitted in the process at step S6 in Fig. 5. Then, at step S12, the main control part 11 switches the state from the power save state to the running state. After the process at step S12 is executed, state control processing 1 by the main control part 11 ends. Consequently, electric power is supplied to the respective components configuring the information processing terminal 1, and the information processing terminal 1 operates.

Thus, the information processing terminal 1 activates the operation object detecting part 22 (and the touchscreen 23) when a press is detected by the press detecting part 21, and causes the main control part 11 to switch the state from the power save state to the running state when an operation by an operation object is detected by the operation object detecting part 22. Therefore, the information processing terminal 1 switches from the power save state to the running state based on the results of detection by the press detecting part 21 and the operation object detecting part 22, with the result that it is possible to prevent the power save state from being terminated by a wrong operation and achieve reduction of the power consumption of the information processing terminal.

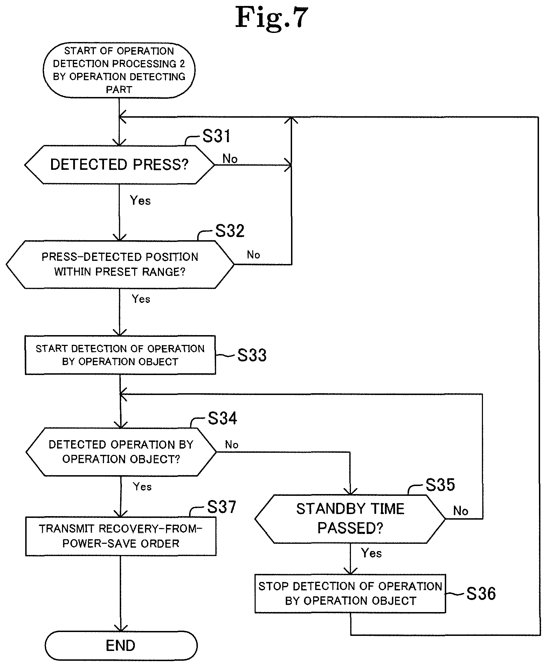

Next, referring to Fig. 7, another operation of the information processing terminal 1 will be described in detail. In the example shown in Fig. 7, the press detecting part 21 is formed in a partial region of the display face of the display part 12, and an operation of switching the state from the power save state to the running state when a press is detected by the press detecting part 21 formed in the partial region of the display face will be described. The information processing terminal 1 is provided with a matrix of press detecting part 21 on the display face, so that it can detect a position where an operation object comes in contact. Moreover, because the processing by the main control part 11 is the same as the processing in Fig. 6 described above, a description will be made referring to Fig. 6.

First, at step S31, the press detecting part 21 determines whether or not it has detected a press on the display face. In a case where the press detecting part 21 determines at step S31 that it has not detected a press (step S31: No), the processing returns to step S31 and the same process is repeated. On the other hand, in a case where the press detecting part 21 determines at step S31 that it has detected a press (step S31: Yes), at step S32, the press detecting part 21 determines whether or not a position where the press has been detected is within a preset range. For example, the press detecting part 21 determines whether or not the region of the operation object detecting part 21C shown in Fig. 2B has been pressed.

In a case where the press detecting part 21 determines at step S32 that the position where the press has been detected is not within the preset range (step S32: No), the processing returns to step S31 and the processes therefrom are repeated. On the other hand, in a case where the press detecting part 21 determines at step S32 that the position where the press has been detected is within the preset range (step S32: Yes), the processing proceeds to step S33.

At step S33, the operation object detecting part 22 starts detection of an operation by an operation object. In other words, the operation object detecting part 22 activates the touchscreen 23 and the function of the operation object detecting part 22 to detect an operation by an operation object, and recovers from the power save state.

Next, at step S34, the operation object detecting part 22 determines whether or not it has detected an operation by an operation object. In a case where the operation object detecting part 22 determines at step S34 that it has not detected an operation by an operation object (step S34: No), at step S35, the operation object detecting part 22 determines whether or not a preset standby time has passed by since the detection of the press by the press detecting part 21. In a case where the operation object detecting part 22 determines at step S35 that the standby time has not passed by yet (step S35: No), the processing returns to step S34 and the processes therefrom are repeated. On the other hand, in a case where the operation object detecting part 22 determines at step S35 that the standby time has passed by (step S35: Yes), at step S36, the operation object detecting part 22 stops detection of an operation by an operation object. In other words, the operation object detecting part 22 stops the touchscreen 23 and the function of the operation object detecting part 22 to detect an operation by an operation object, and returns to the power save state. After the process at step S36 is executed, the processing returns to step S31 and the processes therefrom are repeated.

On the other hand, in a case where the operation object detecting part 22 determines at step S34 that it has detected an operation by an operation object (step S34: Yes), at step S37, the operation object detecting part 22 transmits a recovery-from-power-save order to the main control part 11. After the process at step S37 is executed, operation detection processing 2 ends.

Next, at step S11 in Fig. 6, the main control part 11 receives the recovery-from-power-save order transmitted in the process at step S6 in Fig. 5. Then, at step S12, the main control part 11 switches the state from the power save state to the running state. Consequently, electric power is supplied to the respective components configuring the information processing terminal 1, and the information processing terminal 1 operates. To be specific, the power save state is, for example, a state where supply of electric power to the display part 12 (the component) is stopped and the display part 12 does not display a screen. Moreover, the running state is a state where electric power is supplied to the display part 12 and the display part 12 displays a screen.

Thus, the information processing terminal 1 activates the operation object detecting part 22 (and the touchscreen 23) when a press is detected by the press detecting part 21, and causes the main control part 11 to switch the state from the power save state to the running state when an operation by an operation object is detected by the operation object detecting part 22. Therefore, the information processing terminal 1 switches from the power save state to the running state based on the results of detection by the press detecting part 21 and the operation object detecting part 22, with the result that it is possible to prevent the power save state from being terminated by a wrong operation and achieve reduction of the power consumption of the information processing terminal.

### <Second Exemplary Embodiment>

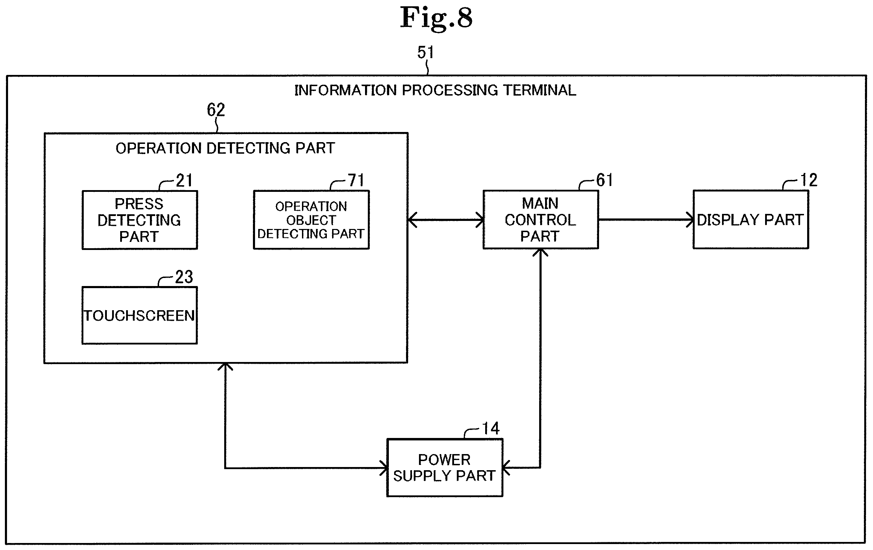

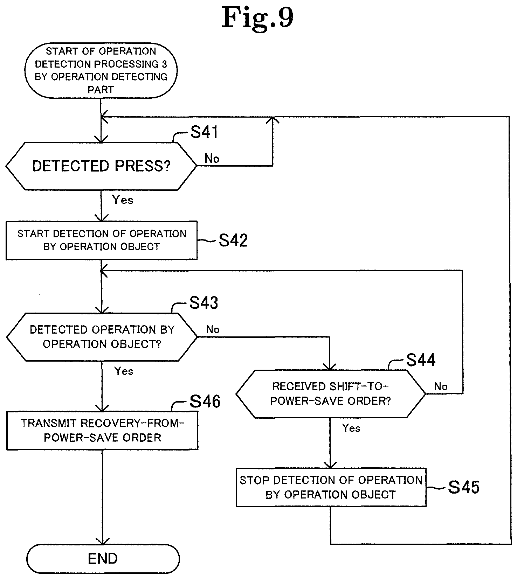

Next, a second exemplary embodiment of the present invention will be described referring to Figs. 8 to 12. Fig. 8 is a diagram for describing the configuration of an information processing terminal. Figs. 9 to 12 are diagrams for describing the operation of the information processing terminal.

### [Configuration]

As shown in Fig. 8, an information processing terminal 51 according to this exemplary embodiment includes the display part 12, the power supply part 14, a main control part 61, and an operation detecting part 62. Among elements of the information processing terminal 51 shown in Fig. 8, elements corresponding to those of the information processing terminal 1 shown in Fig. 1 are denoted by the same reference numerals. Therefore, the same components will be briefly described. The information processing terminal 51 has at least three states: a running state (a first running state) to perform a preset operation; a provisional running state (a second running state) where electric power is more saved than in the running state and it is possible to switch the state to the running state in a shorter time than a time for switching the state from the power save state to the running state; and a power save state (a second electric power setting state) where electric power is more saved than in the provisional running state.

The provisional running state is, for example, a sleep state to stop supply of electric power to the display part 12, a storage part like a hard disk drive (not shown in the drawings), peripheral equipment, and so on, which are part of the components configuring the information processing terminal 51. The power save state is, for example, a suspend state to disconnect at least a main power supply to reduce power consumption than in the provisional running state. Moreover, the power save state is, for example, a state to reduce only the power consumption of the display part 12 (decrease the luminescence, turn off the screen, and disconnect from the power supply) than in the provisional running state where at least part of the display part 12, the operation detecting part 62 and the main control part 61 are operating so that it is possible to quickly respond to an operation by the user. The provisional running state and the power save state are not limited to the abovementioned ones. It is enough, for example, as far as the magnitude of the maximum power consumption in the running state is the largest, the magnitude of the maximum power consumption in the provisional running state is the second largest, and the magnitude of the maximum power consumption in the power save state is the third largest (magnitude of maximum power consumption: running state > provisional running state > power save state).

In the provisional running state, it is desirable to give priority to input, display and control necessary for responding to an operation by the user more quickly than in the power save state, give priority to an operation of a large processing amount when shifting from the power save state to the running state or an operation requiring much time to shift, and give priority to recovery of a component consuming relatively small electric power to the power save state.

Next, the configuration of the main control part 61 will be described. The main control part 61 has the same configuration as the main control part 11 described above. In other words, the main control part 61 includes a CPU, a memory, and an input/output interface (not shown in the drawings). Then, the CPU loads a program stored in the memory and the main control part 61 thereby controls the operation of the information processing terminal 51. Moreover, the main control part 61 controls activation of the display part 12 and display to the display part 12. For example, the main control part 61 displays various kinds of data such as characters and images on the display face of the display part 12. The display part 12 is formed by, for example, a liquid crystal display, an organic EL display, or the like.

The main control part 61 (a state control part) has a function to switch the state of the information processing terminal 51 among three states (the running state, the provisional running state, and the power save state). For example, when a predetermined input operation has not been accepted by a preset time in the running state, the main control part 61 switches the state from the running state to the power save state. Further, for example, when a press is detected by the press detecting part 21 of the operation detecting part 62 in the power save state, the main control part 61 switches the state from the power save state to the provisional running state. Furthermore, when an operation object is detected by an operation object detecting part 71 of the operation detecting part 62 in the provisional running state, the main control part 61 switches the state from the provisional running state to the running state. Besides, when, after switching of the state to the provisional running state, a recovery-from-power-save order has not been received from the operation object detecting part 71 by a preset standby time, the main control part 61 transmits a shift-to-power-save order to the operation object detecting part 71, and switches the state from the provisional state to the power save state. A recovery-from-power-save order is an order for switching the state of the information processing terminal 51 from the provisional running state (or the power save state) to the running state. A shift-to-power-save order is an order for shifting the state of the operation object detecting part 71 to the power save state.

Further, the main control part 61 has a function to monitor detection of a press by the press detecting part 21. The function to monitor detection of a press by the press detecting part 21 is the same as the function of the operation object detecting part 22 to monitor detection of a press by the press detecting part 21 described referring to Fig. 3. Moreover, the main control part 61 can also transmit an operation object detection order for starting detection of an operation object to the operation object detecting part 71, which will be described later, when a press is detected by the press detecting part 21.

The operation detecting part 62 includes the press detecting part 21, the touchscreen 23, and the operation object detecting part 71. In the power save state (and in the provisional running state), the operation detecting part 62 accepts a predetermined input operation, and also detects an operation by a preset operation object. Moreover, in the running state, the operation detecting part 62 functions as an input interface.

The press detecting part 21, which is formed on the display face of the display part 12, detects a press on the display face and accepts a pressing operation of pressing the display face as an input operation. Because the press detecting part 21 detects a press on the display face even in the power save state, the press detecting part 21 is electrically connected with the power supply part 14 and is kept running at all times.

The operation object detecting part 71 has a function to detect an operation by a preset operation object. Moreover, the operation object detecting part 71 has a function to monitor detection of a press by the press detecting part 21. In the power save state, the operation object detecting part 71 is in a state where only the function to monitor detection of a press by the press detecting part 21 works and the function to detect an operation by an operation object stops (the power save state of the operation object detecting part 71). The operation object detecting part 71 may not have the function to monitor detection of a press by the press detecting part 21. In this case, when receiving an operation object detection order transmitted from the main control part 61, the operation object detecting part 71 starts electrical connection with the power supply part 14 and activates the function to detect an operation by an operation object. Consequently, the operation object detecting part 71 recovers from the power save state, and starts detection of an operation by an operation object by using the touchscreen 23.

The touchscreen 23 is, for example, a capacitive touchscreen, and is formed on the display face of the display part 12. The operation object detecting part 71 detects a contact operation by an operation object which can be detected by the touchscreen 23 and which has a characteristic of permitting the flow of electrical current (e.g., a human body, and a conductor).

Then, upon detecting an operation by an operation object by using the touchscreen 23, the operation object detecting part 71 transmits, to the main control part 61, a recovery-from-power-save order for switching the state of the information processing terminal 51 (the components configuring the information processing terminal 51) from the provisional running state to the running state. On the other hand, upon receiving a shift-to-power-save order from the main control part 61, the operation object detecting part 71 stops detection of an operation object, and returns to the power save state before the detection of the press by the press detecting part 21. As well as the abovementioned operation object detecting part 22, the operation object detecting part 71 may be configured to, in a case where a press is detected by the press detecting part 21, detection of an operation by an operation object is started, and a preset standby time passes by without detection of an operation by an operation object, stop detection of an operation object and return to the power save state before detection of the press by the press detecting part 21.

### [Operation]

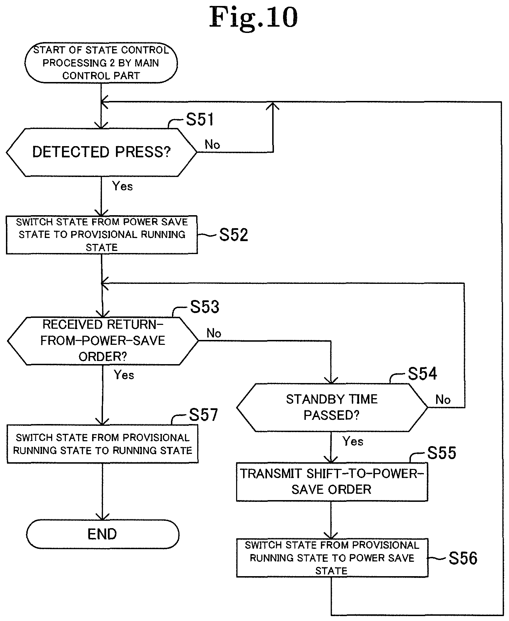

Next, referring to Figs. 9 and 10, the operation of the abovementioned information processing terminal 51 will be described in detail. In the example shown by Figs. 9 and 10, it is assumed that the state of the information processing terminal 51 is set to the power save state.

First, at step S41 in Fig. 9, the press detecting part 21 determines whether or not it has detected a press on the display face. In a case where the press detecting part 21 determines at step S41 that it has not detected a press (step S41: No), the processing returns to step S41 and the same process is repeated. On the other hand, in a case where the press detecting part 21 determines at step S41 that it has detected a press on the display face (step S41: Yes), at step S42, the operation object detecting part 71 starts detection of an operation by an operation object. In other words, the operation object detecting part 71 activates the touchscreen 23 and the function of the operation object detecting part 71 to detect an operation by an operation object, and recovers from the power save state.

Subsequently, at step S43, the operation object detecting part 71 determines whether or not it has detected an operation by an operation object. In a case where the operation object detecting part 71 determines at step S43 that it has not detected an operation by an operation object (step S43: No), at step S44, the operation object detecting part 71 determines whether or not it has received a shift-to-power-save order from the main control part 61. In a case where the operation object detecting part 71 determines at step S44 that it has not received a shift-to-power-save order (step S44: No), the processing returns to step S43 and the processes therefrom are repeated.

State control processing 2 by the main control part 61 will be described referring to Fig. 10. First, at step S51, the main control part 61 determines (monitors) whether or not a press has been detected by the press detecting part 21. In a case where the main control part 61 determines at step S51 that a press has not been detected (step S51: No), the processing returns to step S51 and the same process is repeated. On the other hand, in a case where the main control part 61 determines at step S51 that a press has been detected (step S51: Yes), at step S52, the main control part 61 switches the state from the power save state to the provisional running state. By switching the state to the provisional running state, the main control part 61 can switch the state to the running state in a shorter time than a time for switching the state of the information processing terminal 51 from the power save state to the running state.

Next, at step S53, the main control part 61 determines whether or not it has received a recovery-from-power-save order from the operation object detecting part 71. In a case where the main control part 61 determines at step S53 that it has not received a recovery-from-power-save order (step S53: No), at step S54, the main control part 61 determines whether or not a preset standby time has passed by after switching the state to the provisional running state. In a case where the main control part 61 determines at step S54 that the preset standby time has not passed by (step S54: No), the processing returns to step S53 and the processes therefrom are repeated. On the other hand, in a case where the main control part 61 determines at step S54 that the preset standby time has passed by (step S54: Yes), at step S55, the main control part 61 transmits a shift-to-power-save order to the operation object detecting part 71. By transmitting a shift-to-power-save order, it is possible to cause the operation object detecting part 71 to shift to the power-save state. Next, at step S56, the main control part 61 switches the state from the provisional running state to the power save state. After the process at step S56, the processing returns to step S51 and the processes therefrom are repeated.

Returning to Fig. 9, the processing by the operation detecting part 62 will be described. In a case where the operation object detecting part 71 determines at step S44 in Fig. 9 that it has received the shift-to-power-save order transmitted from the main control part 61 in the process at step S55 in Fig. 10 (step S44: Yes), at step S45, the operation object detecting part 71 stops detection of an operation by an operation object. In other words, the operation object detecting part 71 stops the touchscreen 23 and the function of the operation object detecting part 71 to detect an operation by an operation object, and returns to the power save state. After the process at step S45, the processing returns to step S41 and the processes therefrom are repeated.

On the other hand, in a case where the operation object detecting part 71 determines at step S43 that it has detected an operation by an operation object (step S43: Yes), at step S46, the operation object detecting part 71 transmits a recovery-from-power-save order to the main control part 61. Consequently, it is possible to shift the state of the information processing terminal 51 to the running state. After the process at step S46 is executed, the operation detection processing 2 ends.

On the other hand, in a case where the main control part 61 determines at step S53 in Fig. 10 that it has received the recovery-from-power-save order transmitted in the process at step S46 in Fig. 9 (step S53: Yes), at step S57, the main control part 61 switches the state from the provisional running state to the running state. Consequently, electric power is supplied to each of the components configuring the information processing terminal 51, and the information processing terminal 51 operates.

Thus, in a case where a press is detected by the press detecting part 21, the main control part 61 switches the state of the information processing terminal 51 from the power save state to the provisional running state where it is possible to switch the state to the running state in a shorter time than a time for switching the state from the power save state to the running state. In a case where an operation by an operation object is detected by the operation object detecting part 71, the state is switched from the provisional running state to the running state, with the result that it is possible to more quickly recover the information processing terminal from the power save state.

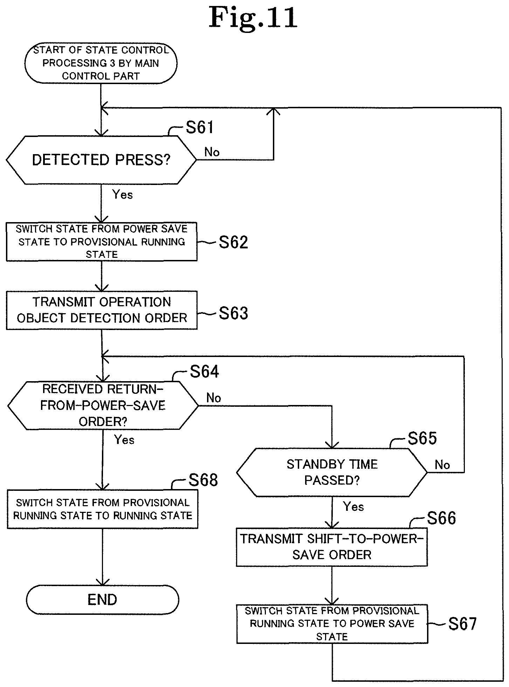

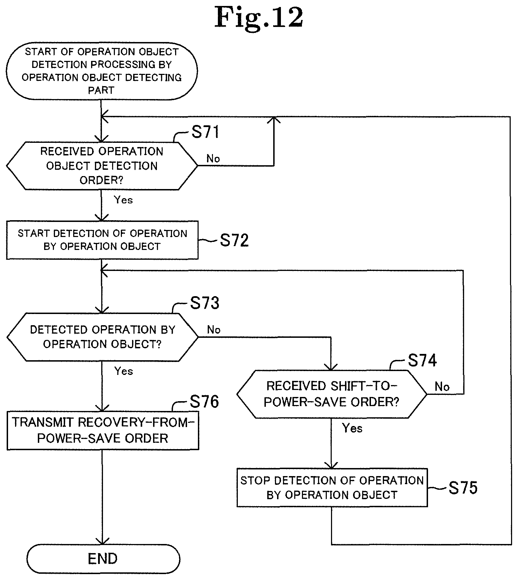

In the abovementioned example, both the main control part 61 and the operation object detecting part 71 monitor the result of detection by the press detecting part 21, but it is also possible to cause either the main control part 61 or the operation object detecting part 21 (e.g., the main control part 61) to monitor the result of detection by the press detecting part 21. Referring to Figs. 11 and 12, another operation of the information processing terminal 51 will be described in detail.

First, referring to Fig. 11, state control processing 3 by the main control part 61 will be described. At step S61, the main control part 61 determines (monitors) whether or not a press has been detected by the press detecting part 21. In a case where the main control part 61 determines at step S61 that a press has not been detected (step S61: No), the processing returns to step S61 and the same process is repeated. On the other hand, in a case where the main control part 61 determines at step S61 that a press has been detected (step S61: Yes), at step S62, the main control part 61 switches the state from the power save state to the provisional running state. Next, at step S63, the main control part 61 transmits an operation object detection order for causing the operation object detecting part 71 to start detection of an operation object, to the operation object detecting part 71.

Next, at step S71 in Fig. 12, the operation object detecting part 71 determines whether or not it has received the operation object detection order transmitted in the process at step S63 in Fig. 11. In a case where the operation object detecting part 71 determines at step S71 that it has not received the operation object detection order (step S71: No), the processing returns to step S71 and the same process is repeated. On the other hand, in a case where the operation object detecting part 71 determines at step S71 that it has received the operation object detection order transmitted in the process at step S63 in Fig. 11 (step S71: Yes), at step S72, the operation object detecting part 71 starts detection of an operation by an operation object. In other words, the operation object detecting part 71 activates the touchscreen 23 and the function of the operation object detecting part 71 to detect an operation by an operation object, and recovers from the power save state.

Subsequently, at step S73, the operation object detecting part 71 determines whether or not it has detected an operation by an operation object. In a case where the operation object detecting part 71 determines at step S73 that it has not detected an operation by an operation object (step S73: No), at step S74, the operation object detecting part 71 determines whether or not it has received a shift-to-power-save order from the main control part 61. In a case where the operation object detecting part 71 determines at step S74 that it has not received a shift-to-power-save order (step S74: No), the processing returns to step S73 and the processes therefrom are repeated.

Returning to Fig. 11, the processing by the main control part 61 will be described. At step S64 in Fig. 11, the main control part 61 determines whether or not it has received a recovery-from-power-save order from the operation object detecting part 71. In a case where the main control part 61 determines at step S64 that it has not received a recovery-from-power-save order (step S64: No), at step S65, the main control part 61 determines whether or not a preset standby time has passed by since switching to the provisional running state. In a case where the main control part 61 determines at step S65 that the standby time has not passed by (step S65: No), the processing returns to step S64 and the processes therefrom are repeated. On the other hand, in a case where the main control part 61 determines at step S65 that the standby time has passed by (step S65: Yes), at step S66, the main control part 61 transmits a shift-to-power-save order to the operation object detecting part 71. Next, at step S67, the main control part 61 switches the state from the provisional running state to the power save state. After the process at step S67, the processing returns to step S61 and the processes therefrom are repeated.

On the other hand, in a case where the operation object detecting part 71 determines at step S74 in Fig. 12 that it has received the shift-to-power-save order transmitted in the process at step S66 in Fig. 11 (step S74: Yes), at step S75, the operation object detecting part 71 stops detection of an operation by an operation object. In other words, the operation object detecting part 71 stops the touchscreen 23 and the function of the operation object detecting part 71 to detect an operation by an operation object, and returns to the power save state. After the process at step S75, the processing returns to step S71 and the processes therefrom are repeated.

On the other hand, in a case where the operation object detecting part 71 determines at step S73 that it has detected an operation by an operation object (step S73: Yes), at step S76, the operation object detecting part 71 transmits a recovery-from-power-save order to the main control part 61. After the process at step S76 is executed, the operation object detection processing ends.

Further, in a case where the main control part 61 determines at step S64 in Fig. 11 that it has received the recovery-from-power-save order transmitted in the process at step S76 in Fig. 12 (step S64: Yes), at step S68, the main control part 61 switches the state from the provisional running state to the running state.

Thus, in a case where a press is detected by the press detecting part 21, the main control part 61 switches the state from the power save state to the provisional running state where it is possible to switch to the running state in a shorter time than a time for switching the state from the power save state to the running state. Then, because the main control part 61 transmits an operation object detection order to the operation object detecting part 71, the operation object detecting part 71 does not need to monitor detection of a press by the press detecting part 21, it is possible to reduce the cost, and it is also possible to start the processing by the operation object detecting part 71 more securely.

### <Third Exemplary Embodiment>

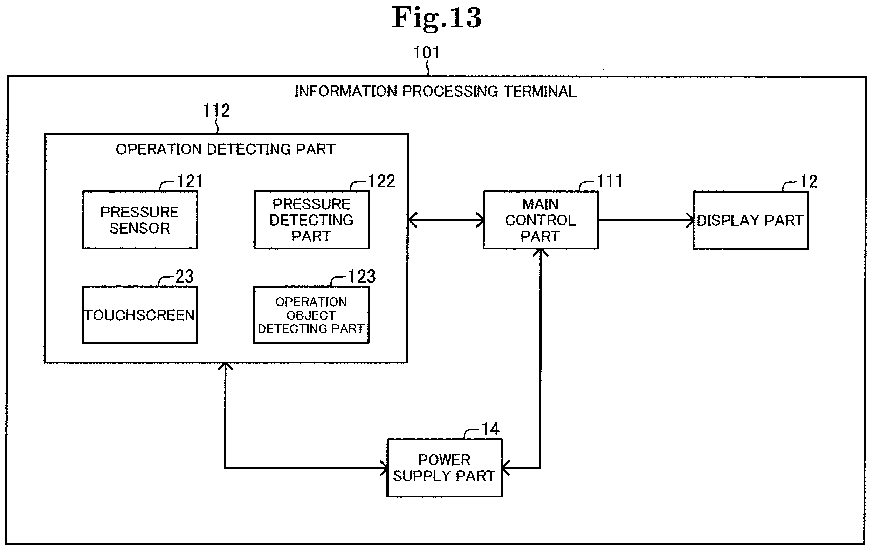

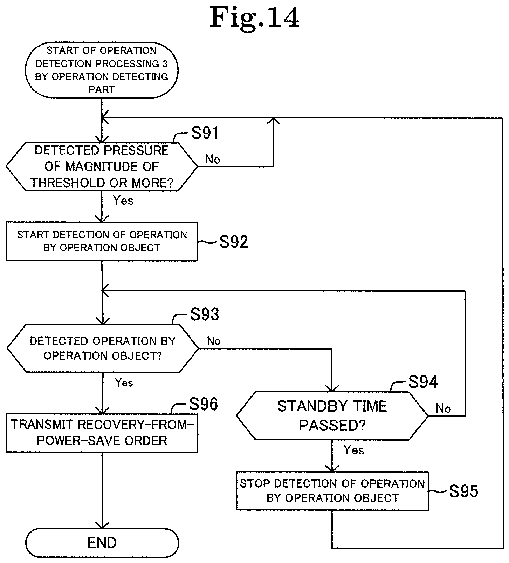

Next, a third exemplary embodiment of the present invention will be described referring to Figs. 13 and 14. Fig. 13 is a diagram for describing the configuration of an information processing terminal. Fig. 14 is a diagram for describing the operation of the information processing terminal.

### [Configuration]

As shown in Fig. 13, an information processing terminal 101 according to this exemplary embodiment includes a main control part 111, the display part 12, the power supply part 14, and an operation detecting part 112. Among the elements of the information processing terminal 101 shown in Fig. 13, elements corresponding to those of the information processing terminal 1 shown in Fig. 1 are denoted by the same reference numerals. Therefore, the same components will be briefly described. The information processing terminal 101 has at least two states: a running state to perform a preset operation; and a power save state which is more power-save setting (less power-consuming) than the running state.

The power save state is, for example, a sleep state to stop supply of electric power to the display part 12, a storage part like a hard disk drive (not shown in the drawings), peripheral equipment, and so on, which are part of the components configuring the information processing terminal 101, or a suspend state to disconnect at least a main power supply to reduce power consumption than in the sleep state. The power save state (a second electric power setting state) can be any state as far as power consumption is reduced than in the running state (a first electric power setting state).

Next, the configuration of the main control part 111 will be described. The main control part 111 includes a CPU, a memory, and an input/output interface (not shown in the drawings). Then, the CPU loads a program stored in the memory and the main control part 111 thereby controls the operation of the information processing terminal 101.

Further, the main control part 111 controls activation of the display part 12 and display to the display part 12. For example, the main control part 111 displays various kinds of data such as characters and images on the display face of the display part 12. The display part 12 is configured by, for example, a liquid crystal display, an organic EL display, or the like. Meanwhile, the display part 12 is not limited to the abovementioned configuration, and may be realized by any configuration.

The main control part 111 (a state control part) has a function to switch the state of the information processing terminal 101 between the two states (the running state and the power save state). For example, when a predetermined input operation is not accepted by a preset time in the running state, the main control part 111 switches the state from the running state to the power save state. Moreover, for example, when a predetermined input operation satisfying a preset condition is accepted in the power save state, the main control part 111 switches the state from the power save state to the running state.

Next, the configuration of the operation detecting part 112 will be described. The operation detecting part 112 includes the operation object detecting part 22, the touchscreen 23, a pressure sensor 121, and a pressure detecting part 122. In the power save state, the operation detecting part 112 detects an input operation by a preset operation object. Moreover, in the running state, the operation detecting part 112 functions as an input interface.

The pressure sensor 121 is formed on the display face of the display part 12, and is configured to be capable of detecting the pressure of an operation object onto the display face. The pressure detecting part 122 detects the pressure of an operation object onto the display face by using the pressure sensor 121. Then, the pressure detecting part 122 determines whether or not the magnitude of the detected pressure is equal to or more than a preset threshold (whether or not it is equivalent to a press on the display face). Because the pressure detecting part 122 detects the pressure of an operation object onto the display face even in the power save state, the pressure detecting part 122 is electrically connected with the power supply part 14 and kept running at all times. It is assumed that the power consumption of the pressure detecting part 122 is sufficiently smaller than the power consumption of the operation object detecting part 22. Moreover, the magnitude of the threshold can be changed by input when necessary.

The operation object detecting part 123 has a function to detect an operation by a preset operation object. Moreover, the operation object detecting part 123 has a function to monitor detection of pressure of the magnitude of the preset threshold or more by the pressure detecting part 122. In the power save state, the operation object detecting part 123 is in a state where only the function to monitor detection of a press by the press detecting part 21 works and the function to detect an operation by an operation object stops (the power save state of the operation object detecting part 123).

When a press is detected by the pressure detecting part 122, the operation object detecting part 123 is provided with supply of larger electric power than in the power save state from the power supply part 14, and activates the function to detect an operation by an operation object and the touchscreen 23. Consequently, the operation object detecting part 123 recovers from the power save state and starts detection of an operation object by using the touchscreen 23.

The touchscreen 23 is, for example, a capacitive touchscreen, and is formed on the display face of the display part 12. The operation object detecting part 123 detects an operation object which can be detected by the touchscreen 23 and which has a characteristic of permitting the flow of electrical current (e.g., a human body, and a conductor). Meanwhile, the touchscreen 23 is not limited to a capacitive type, and may be any configuration that can detect a preset operation object.

When detecting an operation by an operation object by using the touchscreen 23, the operation object detecting part 123 transmits, to the main control part 111, a recovery-from-power-save order for switching the information processing terminal 101 from the power save state to the running state. On the other hand, when, after pressure of the magnitude of the threshold or more is detected by the pressure detecting part 122, a preset standby time passes by without detection of an operation by an operation object, the operation object detecting part 123 stops detection of an operation object and returns to the power save state before the detection of the pressure of the magnitude of the threshold or more by the pressure detecting part 122.

The operation object detecting part 123 may not have the function to monitor detection of pressure of the magnitude of the threshold or more by the pressure detecting part 122. In this case, the pressure detecting part 122 transmits an operation object detection order to the operation object detecting part 123 in the case of detecting pressure of the magnitude of the threshold or more. Then, when receiving the operation object detection order transmitted from the pressure detecting part 122, the operation object detecting part 123 starts electrical connection with the power supply part 14 and activates the function to detect an operation by an operation object and the touchscreen 23. Consequently, the operation object detecting part 123 recovers from the power save state and starts detection of an operation object by using the touchscreen 23.

### [Operation]

Next, referring to Fig. 14, the operation of the abovementioned information processing terminal 101 will be described in detail. Because the operation of the main control part 111 is the same as the operation of the main control part 11 shown in Fig. 6, the description will be made referring to Fig. 6. Moreover, in the example shown by Fig. 14, it is assumed that the information processing terminal 101 is set to the power save state.

First, at step S91, the pressure detecting part 122 determines whether or not it has detected pressure of the magnitude of a preset threshold or more. In a case where the pressure detecting part 122 determines at step S91 that it has not detected pressure of the magnitude of the threshold or more (step S91: No), the processing returns to step S91 and the same process is repeated. On the other hand, in a case where the pressure detecting part 122 determines at step S91 that it has detected pressure of the magnitude of the threshold or more (step S91: Yes), at step S92, the operation object detecting part 123 starts detection of an operation by an operation object. In other words, the operation object detecting part 123 activates the touchscreen 23 and the function of the operation object detecting part 123 to detect an operation by an operation object, and recovers from the power save state.

Next, at step S93, the operation object detecting part 123 determines whether or not it has detected an operation by an operation object. In other words, the operation object detecting part 123 determines whether or not an object having applied the pressure on the display face in the process at step S91 is a preset operation object (e.g., a human body). In a case where the operation object detecting part 123 determines at step S93 that it has not detected an operation by an operation object (step S93: No), at step S94, the operation object detecting part 123 determines whether or not a preset standby time has passed by since the detection of the pressure of the magnitude of the threshold or more by the pressure detecting part 122. In a case where the operation object detecting part 123 determines at step S94 that the standby time has not passed by (step S94: No), the processing returns to step S93 and the processes therefrom are repeated. On the other hand, in a case where the operation object detecting part 123 determines at step S94 that the standby time has passed by (step S94: Yes), at step S95, the operation object detecting part 123 stops detection of an operation by an operation object. In other words, the operation object detecting part 123 stops the touchscreen 23 and the function of the operation object detecting part 123 to detect an operation by an operation object, and returns to the power save state. After the process at step S95, the processing returns to step S91 and the processes therefrom are repeated.

On the other hand, in a case where the operation object detecting part 123 determines at step S93 that it has detected an operation by an operation object (step S93: Yes), at step S96, the operation object detecting part 123 transmits a recovery-from-power-save to the main control part 111. After the process at step S93 is executed, operation detection processing 3 ends.

Next, at step S11 in Fig. 6, the main control part 111 receives the recovery-from-power-save order transmitted in the process at step S96 in Fig. 14. Then, at step S12, the main control part 111 switches the state from the power save state to the running state.

Thus, in the information processing terminal 101, the pressure detecting part 122 determines whether or not it has detected pressure of a preset threshold or more, so that it is possible to set the definition of a press (a threshold to detect a press) in more detail as compared with a case of using the press detecting part 21 configured by a switch and it is possible to increase the convenience for the user.

Besides, the information processing terminal 101 can be configured to switch among the running state, the provisional running state and the power save state by employment of the configuration described in the second exemplary embodiment.

### <Fourth Exemplary Embodiment>

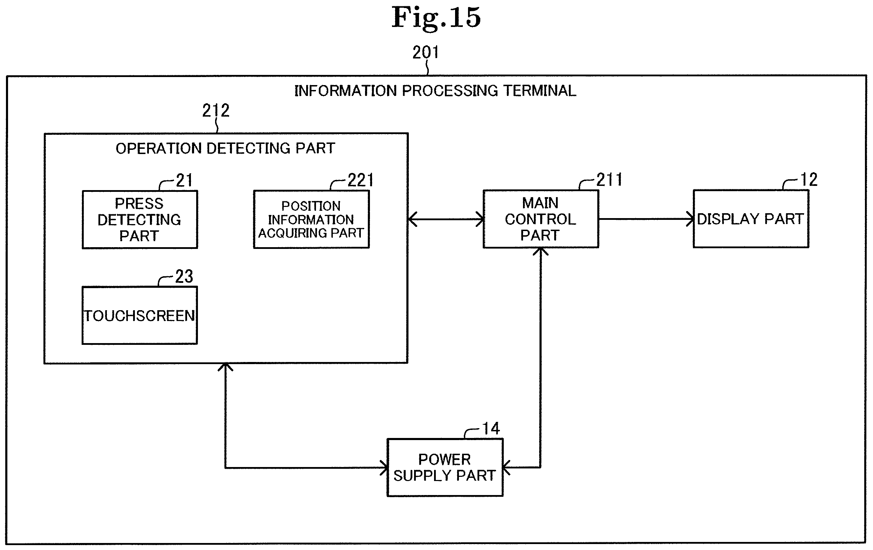

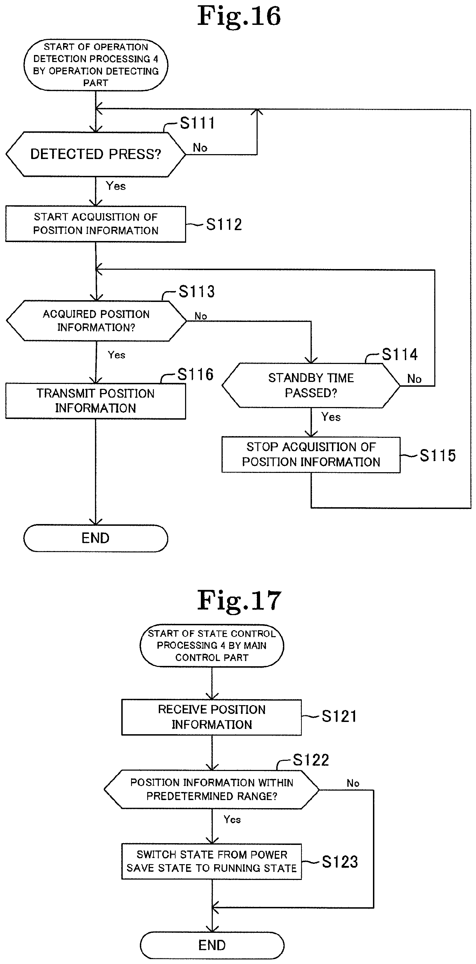

Next, a fourth exemplary embodiment of the present invention will be described referring to Figs. 15 to 17. Fig. 15 is a diagram for describing the configuration of an information processing terminal. Figs. 16 and 17 are diagrams for describing the operation of the information processing terminal.

### [Configuration]

As shown in Fig. 15, an information processing terminal 201 according to this exemplary embodiment includes the display part 12, the power supply part 14, a main control part 211, and an operation detecting part 212. Among the elements of the information processing terminal 201 shown in Fig. 15, elements corresponding to those of the information processing terminal 1 shown in Fig. 1 are denoted by the same reference numerals. In other words, the information processing terminal 201 is different from the information processing terminal 1 in that the information processing terminal 201 acquires position information by an input operation instead of detecting an operation by an operation object, whereas the other components are the same as those of the information processing terminal 1. Therefore, the same components will be briefly described. The information processing terminal 201 has at least two states: a running state to perform a preset operation; and a power save state to be more power-save setting (i.e., less power-consuming) than the running state.

The power save state is, for example, a sleep state to stop supply of electric power to the display part 12, a storage part like a hard disk drive (not shown in the drawings), peripheral equipment, and so on, which are part of the components configuring the information processing terminal 201, or a suspend state to disconnect at least a main power supply to reduce power consumption than in the sleep state. The power save state (a second electric power setting state) can be any state as far as power consumption is less than in the running state (a first electric power setting state) as described in the first exemplary embodiment.

Next, the configuration of the main control part 211 will be described. The main control part 211 includes a CPU, a memory, and an input/output interface (not shown in the drawings). Then, the CPU loads a program stored in the memory and the main control part 211 thereby controls the operation of the information processing terminal 201.

Further, the main control part 211 controls activation of the display part 12 and display to the display part 12. For example, the main control part 211 displays various kinds of data such as characters and images on the display face of the display part 12. The display part 12 is configured by, for example, a liquid crystal display, an organic EL display, or the like. Meanwhile, the display part 12 is not limited to the abovementioned configuration, and may be realized by any configuration.

The main control part 211 (a state control part) has a function to switch the state of the information processing terminal 201 between the two states (the running state and the power save state). For example, when a predetermined input operation is not accepted by a preset time in the running state, the main control part 211 switches the state from the running state to the power save state. Moreover, for example, when a predetermined input operation satisfying a preset condition is accepted in the power save state, the main control part 211 switches the state from the power save state to the running state.

Next, the configuration of the operation detecting part 212 will be described. The operation detecting part 212 includes the press detecting part 21, the touchscreen 23, and a position information acquiring part 221. In the power save state, the operation detecting part 212 accepts a predetermined input operation, and also acquires position information of the display face regarding the predetermined input operation. Moreover, in the running state, the operation detecting part 212 functions as an input interface.

The press detecting part 21 is formed on the display face of the display part 12, and detects a press on the display face. Because the press detecting part 21 detects a press on the display face even in the power save state, the press detecting part 21 is electrically connected with the power supply part 14 and is kept running at all times.

The position information acquiring part 221 (a position information acquiring part) has a function to, by using the touchscreen 23, acquire position information of a region in which contact is detected. Moreover, the position information acquiring part 221 has a function to monitor detection of a press by the press detecting part 21. Then, the position information acquiring part 221 transmits the acquired position information to the main control part 211. In the power save state, the position information acquiring part 221 is in a state where only the function to monitor detection of a press by the press detecting part 21 works and the function to, by using the touchscreen 23, acquire position information of a region where contact is detected stops (the power save state of the position information acquiring part 221). The function of the position information acquiring part 221 to monitor detection of a press by the press detecting part 21 is the same as the function of the operation object detecting part 22 described above referring to Fig. 3.

Then, when a press is detected by the press detecting part 21, the position information acquiring part 221 is provided with supply of larger electric power than in the power save state from the power supply part 14, and activates the function to acquire position information of a region where contact has been detected and the touchscreen 23. Consequently, the position information acquiring part 221 recovers from the power save state, and starts acquisition of position information of a region where contact has been detected by using the touchscreen 23. Meanwhile, the position information acquiring part 221 is not limited to using the touchscreen 23, and can acquire position information by using a device, such as a resistive touchscreen and a matrix touchscreen with pressing switches arranged in matrix, which has a configuration capable of detecting position information.

The touchscreen 23 is, for example, a capacitive touchscreen, and is formed on the display face of the display part 12. Meanwhile, the touchscreen 23 does not need to be formed on the entire display face of the display part 12, and may be formed in a partial region of the display face. Moreover, a plurality of touchscreens 23 may be formed on the display face. Furthermore, the touchscreen 23 is not limited to a capacitive type, and may be any configuration that can detect position information of the contact display face.

Then, when acquiring position information, the position information acquiring part 221 transmits the acquired position information to the main control part 211. On the other hand, in a case where, after detection of a press by the press detecting part 21, position information is not acquired before a preset standby time passes by, the position information acquiring part 221 stops acquisition of position information and returns to the power save state before detection of a press by the press detecting part 21.

When receiving the position information transmitted from the position information acquiring part 221, the main control part 211 determines whether or not the received position information is within a preset region of the display face. Then, in a case where the position information is within the preset region, the main control part 211 switches the state from the power save state to the running state. On the other hand, in a case where the position information is not within the preset region, the main control part 211 does not switch the state (keeps the power save state).

### [Operation]

Next, referring to Figs. 16 and 17, the operation of the abovementioned information processing terminal will be described in detail. In the example shown by Figs. 16 and 17, it is assumed that the information processing terminal 201 is set to the power save state.

First, at step S111, the press detecting part 21 determines whether or not it has detected a press on the display face. In a case where the press detecting part 21 determines at step S111 that it has not detected a press (step S111: No), the processing returns to step S111 and the same process is repeated. On the other hand, in a case where the press detecting part 21 determines at step S111 that it has detected a press (step S111: Yes), at step S112, the position information acquiring part 221 starts acquisition of position information. In other words, the position information acquiring part 221 activates the touchscreen 23 and the function of the position information acquiring part 221 to acquire position information, and recovers from the power save state.

Next, at step S113, the position information acquiring part 221 determines whether or not it has acquired position information. In a case where the position information acquiring part 221 determines at step S113 that it has not acquired position information (step S113: No), at step S114, the position information acquiring part 221 determines whether or not a preset standby time has passed by since the detection of the press by the press detecting part 21. In a case where the position information acquiring part 221 determines at step S114 that the standby time has not passed by (step S114: No), the processing returns to step S113 and the processes therefrom are repeated. On the other hand, in a case where the position information acquiring part 221 determines at step S114 that the standby time has passed by (step S114: Yes), at step S115, the position information acquiring part 221 stops acquisition of position information. In other words, the position information acquiring part 221 stops the touchscreen 23 and the function of the position information acquiring part 221 to acquire position information, and then returns to the power save state. After the process at step S115, the processing returns to step S111 and the processes therefrom are repeated.

On the other hand, in a case where the position information acquiring part 221 determines at step S113 that it has acquired position information (step S113: Yes), at step S116, the position information acquiring part 221 transmits a recovery-from-power-save order to the main control part 211. After the process at step S116 is executed, operation detection processing 4 ends.

Next, at step S121 in Fig. 17, the main control part 211 receives the position information transmitted in the process at step S113 in Fig. 16. Then, at step S122, the main control part 211 determines whether or not the position information is within a predetermined range set in advance. To be specific, the main control part 211 determines whether or not the position information is within the range of a preset region of the display face of the display part 12. In a case where the main control part 211 determines at step S122 that the position information is within the preset range (step S122: Yes), at step S123, the main control part 211 switches the state from the power save state to the running state. Consequently, electric power is supplied to each of the components configuring the information processing terminal 201, and the information processing terminal 201 operates. After the process at step S123 is executed, and in a case where the main control part 211 determines at step S122 that the position information is not within the preset range (step S122: No), state control processing 4 ends.

Thus, when a press is detected by the press detecting part 21, the information processing terminal 201 activates the position information acquiring part 221 (and the touchscreen 23) and, when position information is acquired by the position information acquiring part 221, the information processing terminal 201 causes the main control part 211 to switch the state from the power save state to the running state. Because thus recovering from the power save state stepwise, it is possible to achieve reduction of the power consumption of the information processing terminal.

Instead of the operation object detecting parts (e.g., the operation object detecting parts 21, 71 and 123) of the first to third exemplary embodiments described above, the position information acquiring part 221 can be provided. For example, the main control part 61 of the information processing terminal 51 in the second exemplary embodiment can be configured to switch the state of the information processing terminal 51 based on position information acquired by the position information acquiring part 221. To be specific, when a press is detected by the press detecting part 21 in the power save state, the main control part 61 switches the state from the power save state to the provisional running state. Then, when receiving position information transmitted by the position information acquiring part 221 in the provisional funning state, the main control part 61 switches the state from the provisional running state to the running state. Furthermore, in a case where, after switching the state to the provisional running state, the main control part 61 does not receive position information from the position information acquiring part 221 by a preset standby time, the main control part 61 transmits a shift-to-power save order to the position information acquiring part 221. Then, in the case of receiving the shift-to-power-save order transmitted from the main control part 61, the position information acquiring part 221 stops acquisition of position information and returns to the power save state before detection of the press by the press detecting part 21.

In the case of recovering from the power save state to the running state or the provisional running state and thereafter returning to the power save state again, the information processing terminal may not switch to the same power save state as the original one. For example, the information processing terminal may shift stepwise to the original power save state through two or more states, or may keep in a different power save state. To be specific, assuming the information processing terminal has a first power save state and a second power save state which is more power-save setting than the first power save state, in a case where the state recovers from the second power save state to the running state (or the provisional running state) and thereafter the operation object is not detected by the operation object detecting part by a preset time, the main control part (the main control parts 11, 61, 111 and 211) may switch the state to the first power save state. Moreover, after switching the state to the first power save state, the main control part may switch the state to the second power save state when a preset time passes by.

### DESCRIPTION OF REFERENCE NUMERALS

- 1: information processing terminal
- 11: main control part
- 12: display part
- 13: operation detecting part
- 14: power supply part
- 21: press detecting part
- 22: operation object detecting part
- 23: touchscreen
- 31: information processing terminal
- 41: input control part
- 51: information processing terminal
- 61: main control part
- 62: operation detecting part
- 71: operation object detecting part
- 101: information processing terminal
- 111: main control part
- 112: operation detecting part
- 121: pressure sensor
- 122: pressure detecting part
- 123: operation object detecting part
- 201: information processing terminal
- 211: main control part
- 212: operation detecting part
- 221: position information acquiring part

## Claims

1. An information processing terminal (1) comprising:
a state controlling means (11) for controlling switching of a state of the information processing terminal (1) between a first power setting state and a second power setting state, the second power setting state being a more power save setting than the first power setting state;
an input operation accepting part (21) configured to accept a predetermined input operation, the input operation accepting part (21) being a press detecting part (21) including two transparent electrodes which are arranged at a predetermined space, wherein the press detecting part (21) is formed by a switch which is configured to detect mutual contact of the two transparent electrodes and configured to thereby detect a press by a preset operation object; and
an operation object detecting part (13) configured to detect an operation by the preset operation object,
wherein the state controlling means (11) is configured to switch the state from the second power setting state to the first power setting state when, in the second power setting state, the input operation is accepted by the input operation accepting part (21) and also an operation by the operation object is detected by the operation object detecting part (13),
the input operation accepting part (21) is formed on a display face of a display part (12) of the information processing terminal (1) and configured to accept, as the input operation, a pressing operation to press the display face,
the operation object detecting part (13) is configured to, by using a touchscreen, detect an operation by the operation object with a characteristic of permitting flow of electricity, the touchscreen being formed on a display face of a display part (12) of the information processing terminal (1) and being capable of detecting an operation by the operation object by capacitive technology, and
after the pressing operation is accepted by the input operation accepting part (21), when the operation by the operation object is detected by the operation object detecting part, the second power setting state is switched to the first power setting state.

2. The information processing terminal (1) according to Claim 1, wherein the operation object detecting part (13) is configured to stop detection of an operation by the operation object when the state is the second power setting state, and start detection of an operation by the operation object when the input operation is accepted by the input operation accepting part (21) in the second power setting state.

3. The information processing terminal (1) according to Claim 2, wherein the operation object detecting part (13) is configured to stop detection of an operation by the operation object in a case where, after the input operation is accepted by the input operation accepting part (21) in the second power setting state and detection of an operation by the operation object is started, a preset time passes by without detection of an operation by the operation object.

4. The information processing terminal (1) according to any of Claims 1 to 3, wherein the state controlling means (11) is configured not to switch the state to the first power setting state in a case where an operation by the operation object is not detected by the operation object detecting part (13).

5. The information processing terminal (1) according to any of Claims 1 to 4, wherein:
the first power setting state is a running state to supply preset electric power to components configuring the information processing terminal (1); and
the second power setting state is a power save state to reduce power consumption compared to the running state.

6. The information processing terminal (1) according to Claim 5, wherein:
the power save state has a first power save state and a second power save state, the second power save state being a more power save setting than the first power save state; and
the state controlling means (11) is configured to switch the state from the running state to the first power save state in a case where the operation object is not detected by the operation object detecting part (13) by a preset time after the state is switched from the second power save state to the running state.

7. The information processing terminal (1) according to Claim 6, wherein the state controlling means (11) is configured to switch the state from the first power save state to the second power save state when a preset time passes by after the state is switched to the first power save state.

8. The information processing terminal (1) according to any of Claims 5 to 7, wherein:
the running state has a first running state and a second running state, the second running state being a more power save setting than the first running state; and
the state controlling means (11) is configured to:
in a case where the input operation is accepted by the input operation accepting part (21) in the power save state, switch the state from the power save state to the second running state, the second running state being a state to supply electric power to part of the components so as to be capable of switching the state to the first running state in a shorter time than a time for switching the state from the power save state to the first running state;
in a case where the operation object is detected by the operation object detecting part (13) in the second running state, switch the state from the second running state to the first running state; and
in a case where the operation object is not detected by the operation object detecting part (13) by a preset time after the state is switched to the second running state, switch the state from the second running state to the power save state.

9. The information processing terminal (1) according to any of Claims 5 to 8, wherein:
one of the components is a display part (12); and
the power save state is a state to make electric power supplied to the display part (12) less than electric power supplied to the display part (12) in the running state.

10. The information processing terminal (1) according to Claim 9, wherein:
the running state is a state where electric power is supplied to the display part (12) and the display part (12) displays a screen; and
the power save state is a state where supply of electric power to the display part (12) is stopped and the display part (12) does not display a screen.

11. The information processing terminal (1) according to any of Claims 5 to 10, wherein:
magnitude of electric power supplied in the running state is magnitude of actual power consumption of the components operating in the running state; and
magnitude of electric power supplied in the power save state is magnitude of actual power consumption of the components operating in the power save state.

12. The information processing terminal (1) according to any of Claims 1 to 11, wherein the operation object detecting part (13) is configured to detect a human body as the operation object.

13. An information processing terminal (1) comprising:
a state controlling means (11) for controlling switching of a state of the information processing terminal (1) between a first power setting state and a second power setting state, the second power setting state being a more power save setting than the first power setting state;
an input operation accepting part (21) configured to accept a predetermined input operation, the input operation accepting part (21) being a press detecting part (21) including two transparent electrodes which are arranged at a predetermined space, wherein the press detecting part (21) is formed by a switch which is configured to detect mutual contact of the two transparent electrodes and configured to thereby detect a press by an operation object; and
a position information acquiring part (221) configured to acquire position information representing a position where the input operation is conducted,
wherein the state controlling means (11) is configured to switch the state from the second power setting state to the first power setting state when, in the second power setting state, the input operation is accepted by the input operation accepting part (21) and also position information acquired by the position information acquiring part (221) satisfies a preset condition,
the input operation accepting part (21) is formed on a display face of a display part (12) of the information processing terminal (1) and configured to accept, as the input operation, a pressing operation to press the display face,
the position information acquiring part 221 is configured to, by using a touchscreen (23), acquire position information of a region in which contact is detected, and
after the pressing operation is accepted by the input operation accepting part (21), when the position information representing a position where the input operation is conducted is acquired by the position information acquiring part (221), the second power setting state is switched to the first power setting state.

14. The information processing terminal according to Claim 13, wherein the state controlling means is configured to switch the state from the power save state to the running state in a case where, in the power save state, the input operation is accepted by the input operation accepting part (21) and also position information acquired by the position information acquiring part is included within a preset region of a display face of a display part of the information processing terminal.

15. An information processing method by an information processing terminal (1), the information processing method comprising:
accepting a predetermined input operation by an input operation accepting part (21), the input operation accepting part (21) being a press detecting part (21) including two transparent electrodes which are arranged at a predetermined space, wherein the press detecting part (21) is formed by a switch which detects mutual contact of the two transparent electrodes and thereby detects a press by a preset operation object;
detecting an operation by the preset operation object; and
switching a state of the information processing terminal (1) from a second power setting state to a first power setting state in a case where, in the second power setting state, the input operation is accepted and also an operation by the operation object is detected, the second power setting state being a more power save setting than the first power setting state,
wherein as the predetermined input operation a pressing operation to press a display face of a display part (12) of the information processing terminal (1) is accepted,
the detecting of an operation by a preset operation object is performed by using a touchscreen and by detecting an operation by the operation object with a characteristic of permitting flow of electricity, the touchscreen being formed on a display face of a display part (12) of the information processing terminal (1) and being capable of detecting an operation by the operation object by capacitive technology, and
after the pressing operation is accepted, when the operation by the operation object is detected, switching the second power setting state to the first power setting state.

16. A computer program comprising instructions for causing an information processing terminal (1), which includes an input operation accepting part (21) configured to accept a predetermined input operation, the input operation accepting part (21) being a press detecting part (21) including two transparent electrodes which are arranged at a predetermined space, , wherein the press detecting part (21) is formed by a switch which detects mutual contact of the two transparent electrodes and thereby detects a press by a preset operation object and an operation object detecting part (13) configured to detect an operation by the preset operation object, to realize a state controlling means (11) for controlling switching of a state of the information processing terminal (1) between a first power setting state and a second power setting state, the second power setting state being a more power save setting than the first power setting state,
wherein the state controlling means (11) is configured to switch the state from the second power setting state to the first power setting state when, in the second power setting state, the input operation is accepted by the input operation accepting part (21) and also an operation by the operation object is detected by the operation object detecting part (13)
the input operation accepting part (21) is formed on a display face of a display part (12) of the information processing terminal (1) and configured to accept, as the input operation, a pressing operation to press the display face,
the operation object detecting part (13) is configured to, by using a touchscreen, detect an operation by the operation object with a characteristic of permitting flow of electricity, the touchscreen being formed on a display face of a display part (12) of the information processing terminal (1) and being capable of detecting an operation by the operation object by capacitive technology, and
after the pressing operation is accepted by the input operation accepting part (21), when the operation by the operation object is detected by the operation object detecting part, the second power setting state is switched to the first power setting state.

## Patentansprüche

1. Informationsverarbeitungsendgerät (1), das aufweist:
eine Zustandssteuereinrichtung (11) zur Steuerung des Umschaltens eines Zustands des Informationsverarbeitungsendgeräts (1) zwischen einem ersten Leistungseinstellungszustand und einem zweiten Leistungseinstellungszustand, wobei der zweite Leistungseinstellungszustand eine stärker leistungseinsparende Einstellung als der erste Leistungseinstellungszustand ist;
einen Eingabebedienungsannahmeteil (21), der konfiguriert ist, um eine vorgegebene Eingabebedienung anzunehmen, wobei der Eingabebedienungsannahmeteil (21) ein Druckerfassungsteil (21) ist, der zwei transparente Elektroden umfasst, die in einem vorgegebenen Raum angeordnet sind, wobei der Druckerfassungsteil (21) durch einen Schalter ausgebildet ist, der konfiguriert ist, um einen wechselseitigen Kontakt der zwei transparenten Elektroden zu erfassen, und konfiguriert ist, um dadurch ein vorgegebenes Bedienobjekt zu erfassen; und
einen Bedienobjekterfassungsteil (13), der konfiguriert ist, um eine Bedienung durch das vorgegebene Bedienobjekt zu erfassen,
wobei die Zustandssteuereinrichtung (11) konfiguriert ist, um den Zustand von dem zweiten Leistungseinstellungszustand auf den ersten Leistungseinstellungszustand umzuschalten, wenn in dem zweiten Leistungseinstellungszustand die Eingabebedienung von dem Eingabebedienungsannahmeteil (21) angenommen wird und auch eine Bedienung durch das Bedienobjekt durch den Bedienobjekterfassungsteil (13) erfasst wird,
wobei der Eingabebedienungsannahmeteil (21) auf einer Anzeigefläche eines Anzeigeteils (12) des Informationsverarbeitungsendgeräts (1) ausgebildet ist und konfiguriert ist, um eine Druckbedienung zum Drücken der Anzeigefläche als die Eingabebedienung anzunehmen,
wobei der Bedienobjekterfassungsteil (13) konfiguriert ist, um unter Verwendung eines Berührungsbildschirms eine Bedienung durch das Bedienobjekt mit einer Charakteristik, die einen Elektrizitätsfluss erlaubt, zu erfassen, wobei der Berührungsbildschirm auf einer Anzeigefläche eines Anzeigeteils (12) des Informationsverarbeitungsendgeräts (1) ausgebildet ist und fähig ist, eine Bedienung durch das Bedienobjekt durch eine kapazitive Technologie zu erfassen, und
wobei, nachdem die Druckbedienung durch den Eingabebedienungsannahmeteil (21) angenommen wurde, wenn die Bedienung durch das Bedienobjekt durch den Bedienobjekterfassungsteil erfasst wird, der zweite Leistungseinstellungszustand auf den ersten Leistungseinstellungszustand umgeschaltet wird.

2. Informationsverarbeitungsendgerät (1) nach Anspruch 1, wobei der Bedienobjekterfassungsteil (13) konfiguriert ist, um die Erfassung einer Bedienung durch das Bedienobjekt zu stoppen, wenn der Zustand der zweite Leistungseinstellungszustand ist, und die Erfassung einer Bedienung durch das Bedienobjekt zu starten, wenn die Eingabebedienung durch den Eingabebedienungsannahmeteil (21) in dem zweiten Leistungseinstellungszustand angenommen wird.

3. Informationsverarbeitungsendgerät (1) nach Anspruch 2, wobei der Bedienobjekterfassungsteil (13) konfiguriert ist, um die Erfassung einer Bedienung durch das Bedienobjekt in einem Fall, in dem, nachdem die Eingabebedienung durch den Eingabebedienungsannahmeteil (21) in dem zweiten Leistungseinstellungszustand angenommen wurde, und die Erfassung einer Bedienung durch das Bedienobjekt gestartet wird, eine vorgegebene Zeit ohne die Erfassung einer Bedienung durch das Bedienobjekt vergeht, zu stoppen.

4. Informationsverarbeitungsendgerät (1) nach einem der Ansprüche 1 bis 3, wobei die Zustandssteuereinrichtung (11) konfiguriert ist, um den Zustand in einem Fall, in dem von dem Bedienobjekterfassungsteil (13) keine Bedienung durch das Bedienobjekt erfasst wird, nicht auf den ersten Leistungseinstellungszustand zu schalten.

5. Informationsverarbeitungsendgerät (1) nach einem der Ansprüche 1 bis 4, wobei:
der erste Leistungseinstellungszustand ein laufender Zustand ist, um eine vorgegebene elektrische Leistung an Komponenten zuzuführen, welche das Informationsverarbeitungsendgerät (1) konfigurieren; und
der zweite Leistungseinstellungszustand ein Leistungseinsparungszustand ist, um den Leistungsverbrauch im Vergleich zu dem laufenden Zustand zu verringern.

6. Informationsverarbeitungsendgerät (1) nach Anspruch 5, wobei:
der Leistungseinsparungszustand einen ersten Leistungseinsparungszustand und einen zweiten Leistungseinsparungszustand hat, wobei der zweite Leistungseinstellungszustand eine stärker leistungseinsparende Einstellung als der erste Leistungseinstellungszustand ist; und
die Zustandssteuereinrichtung (11) konfiguriert ist, um den Zustand von dem laufenden Zustand in einem Fall, in dem das Bedienobjekt eine vorgegebene Zeit lang, nachdem der Zustand von dem zweiten Leistungseinsparungszustand auf den laufenden Zustand geschaltet wurde, von dem Bedienobjekterfassungsteil (13) nicht erfasst wird, auf den ersten Leistungseinsparungszustand umzuschalten.

7. Informationsverarbeitungsendgerät (1) nach Anspruch 6, wobei die Zustandssteuereinrichtung (11) konfiguriert ist, um den Zustand von dem ersten Leistungseinsparungszustand auf den zweiten Leistungseinsparungszustand umzuschalten, wenn eine vorgegebene Zeit vergeht, nachdem der Zustand auf den ersten Leistungseinsparungszustand geschaltet wurde.

8. Informationsverarbeitungsendgerät (1) nach einem der Ansprüche 5 bis 7, wobei:
der laufende Zustand einen ersten laufenden Zustand und einen zweiten laufenden Zustand hat, wobei der zweite laufende Zustand eine stärker leistungseinsparende Einstellung als der erste laufende Zustand ist; und
die Zustandssteuereinrichtung (11) konfiguriert ist, um:
in einem Fall, in dem die Eingabebedienung durch den Eingabebedienungsannahmeteil (21) in dem Leistungseinsparungszustand angenommen wird, den Zustand von dem Leistungseinsparungszustand auf den zweiten laufenden Zustand umzuschalten, wobei der zweite laufende Zustand ein Zustand ist, um Leistung an einen Teil der Komponenten zuzuführen, um in der Lage zu sein, den Zustand in einer kürzeren Zeit als einer Zeit zum Umschalten des Zustands von dem Leistungseinsparungszustand auf den ersten laufenden Zustand auf den ersten laufenden Zustand umzuschalten;
in einem Fall, in dem das Bedienobjekt durch den Bedienobjekterfassungsteil (13) in dem zweiten laufenden Zustand erfasst wird, den Zustand von dem zweiten laufenden Zustand auf den ersten laufenden Zustand umzuschalten; und
in einem Fall, in dem das Bedienobjekt durch den Bedienobjekterfassungsteil (13) eine vorgegebene Zeit lang, nachdem der Zustand auf den zweiten laufenden Zustand geschaltet wurde, nicht erfasst wird, den Zustand von dem zweiten laufenden Zustand auf den Leistungseinsparungszustand umzuschalten.

9. Informationsverarbeitungsendgerät (1) nach einem der Ansprüche 5 bis 8, wobei:
eine der Komponenten ein Anzeigeteil (12) ist; und
der Leistungseinsparungszustand ein Zustand ist, um die elektrische Leistung, die an den Anzeigeteil (12) zugeführt wird, kleiner als die elektrische Leistung, die in dem laufenden Zustand an den Anzeigeteil (12) zugeführt wird, zu machen.

10. Informationsverarbeitungsendgerät (1) nach Anspruch 9, wobei:
der laufende Zustand ein Zustand ist, in dem elektrische Leistung an den Anzeigeteil (12) zugeführt wird und der Anzeigeteil (12) einen Bildschirm anzeigt; und
der Leistungseinsparungszustand ein Zustand ist, in dem die Zuführung von elektrischer Leistung an den Anzeigeteil (12) gestoppt ist und der Anzeigeteil (12) keinen Bildschirm anzeigt.

11. Informationsverarbeitungsendgerät (1) nach einem der Ansprüche 5 bis 10, wobei:
der Betrag der elektrischen Leistung, die in dem laufenden Zustand zugeführt wird, der Betrag des tatsächlichen Leistungsverbrauchs der Komponenten, die in dem laufenden Zustand arbeiten, ist; und
der Betrag der elektrischen Leistung, der in dem Leistungseinsparungszustand zugeführt wird, der Betrag des tatsächlichen Leistungsverbrauchs der Komponenten ist, die in dem Leistungseinsparungszustand arbeiten.

12. Informationsverarbeitungsendgerät (1) nach einem der Ansprüche 1 bis 11, wobei der Bedienobjekterfassungsteil (13) konfiguriert ist, um einen menschlichen Körper als das Bedienobjekt zu erfassen.

13. Informationsverarbeitungsendgerät (1), das aufweist:
eine Zustandssteuereinrichtung (11) zur Steuerung des Umschaltens eines Zustands des Informationsverarbeitungsendgeräts (1) zwischen einem ersten Leistungseinstellungszustand und einem zweiten Leistungseinstellungszustand, wobei der zweite Leistungseinstellungszustand eine stärker leistungseinsparende Einstellung als der erste Leistungseinstellungszustand ist;
einen Eingabebedienungsannahmeteil (21), der konfiguriert ist, um eine vorgegebene Eingabebedienung anzunehmen, wobei der Eingabebedienungsannahmeteil (21) ein Druckerfassungsteil (21) ist, der zwei transparente Elektroden umfasst, die in einem vorgegebenen Raum angeordnet sind, wobei der Druckerfassungsteil (21) durch einen Schalter ausgebildet ist, der konfiguriert ist, um einen wechselseitigen Kontakt der zwei transparenten Elektroden zu erfassen, und konfiguriert ist, um dadurch ein Bedienobjekt zu erfassen; und
einen Positionsinformationserlangungsteil (221), der konfiguriert ist, um Positionsinformationen zu erlangen, die eine Position darstellen, wo die Eingabebedienung ausgeführt wird,
wobei die Zustandssteuereinrichtung (11) konfiguriert ist, um den Zustand von dem zweiten Leistungseinstellungszustand auf den ersten Leistungseinstellungszustand umzuschalten, wenn in dem zweiten Leistungseinstellungszustand die Eingabebedienung von dem Eingabebedienungsannahmeteil (21) angenommen wird und auch die von dem Positionsinformationserlangungsteil (221) erlangten Positionsinformationen eine vorgegebene Bedingung erfüllen,
wobei der Eingabebedienungsannahmeteil (21) auf einer Anzeigefläche eines Anzeigeteils (12) des Informationsverarbeitungsendgeräts (1) ausgebildet ist und konfiguriert ist, um eine Druckbedienung zum Drücken der Anzeigefläche als die Eingabebedienung anzunehmen,
wobei der Positionsinformationserlangungsteil (221) konfiguriert ist, um unter Verwendung eines Berührungsbildschirms (23) Positionsinformationen eines Bereichs zu erlangen, in dem der Kontakt erfasst wird, und
wobei, nachdem die Druckbedienung durch den Eingabebedienungsannahmeteil (21) angenommen wurde, wenn die Positionsinformationen, die eine Position darstellen, an der die Eingabebedienung ausgeführt wird, durch den Positionsinformationserlangungsteil (221) erlangt werden, der zweite Leistungseinstellungszustand auf den ersten Leistungseinstellungszustand umgeschaltet wird.

14. Informationsverarbeitungsendgerät nach Anspruch 13, wobei die Zustandssteuereinrichtung konfiguriert ist, um den Zustand in einem Fall, in dem in dem Leistungseinsparungszustand eine Eingabebedienung durch den Eingabebedienungsannahmeteil (21) angenommen wird und auch durch den Positionsinformationserlangungsteil erlangte Positionsinformationen in einem vorgegebenen Bereich einer Anzeigefläche eines Anzeigeteils des Informationsverarbeitungsendgeräts enthalten sind, von dem Leistungseinsparungszustand auf den laufenden Zustand umzuschalten.

15. Informationsverarbeitungsverfahren durch ein Informationsverarbeitungsendgerät (1), wobei das Informationsverarbeitungsverfahren aufweist:
Annehmen einer vorgegebenen Eingabebedienung durch einen Eingabebedienungsannahmeteil (21), wobei der Eingabebedienungsannahmeteil (21) ein Druckerfassungsteil (21) ist, der zwei transparente Elektroden umfasst, die in einem vorgegebenen Raum angeordnet sind, wobei der Druckerfassungsteil (21) durch einen Schalter ausgebildet ist, der einen wechselseitigen Kontakt der zwei transparenten Elektroden erfasst und dadurch einen Druck durch ein vorgegebenes Bedienobjekt erfasst;
Erfassen einer Bedienung durch das vorgegebene Bedienobjekt; und
Umschalten eines Zustands des Informationsverarbeitungsendgeräts (1) von einem zweiten Leistungseinstellungszustand auf einen ersten Leistungseinstellungszustand in einem Fall, in dem im zweiten Leistungseinstellungszustand die Eingabebedienung angenommen wird und auch eine Bedienung durch das Bedienobjekt erfasst wird, wobei der zweite Leistungseinstellungszustand eine stärker leistungseinsparende Einstellung als der erste Leistungseinstellungszustand ist,
wobei als die vorgegebene Eingabebedienung eine Druckbedienung zum Drücken einer Anzeigefläche eines Anzeigeteils (12) des Informationsverarbeitungsendgeräts (1) angenommen wird,
das Erfassen einer Bedienung durch das vorgegebene Bedienobjekt unter Verwendung eines Berührungsbildschirms und durch Erfassen einer Bedienung durch das Bedienobjekt mit einer Charakteristik, die einen Elektrizitätsfluss erlaubt, durchgeführt wird, wobei der Berührungsbildschirm auf einer Anzeigefläche eines Anzeigeteils (12) des Informationsverarbeitungsendgeräts (1) ausgebildet ist und fähig ist, eine Bedienung durch das Bedienobjekt durch eine kapazitive Technologie zu erfassen, und
wobei, nachdem die Druckbedienung angenommen wurde, wenn die Bedienung durch das Bedienobjekt erfasst wird, der zweite Leistungseinstellungszustand auf den ersten Leistungseinstellungszustand umgeschaltet wird.

16. Computerprogrammprodukt, das Anweisungen aufweist, um zu bewirken, dass ein Informationsverarbeitungsendgerät (1), das umfasst: einen Eingabebedienungsannahmeteil (21), der konfiguriert ist, um eine vorgegebene Eingabebedienung anzunehmen, wobei der Eingabebedienungsannahmeteil (21) ein Druckerfassungsteil (21) ist, der zwei transparente Elektroden umfasst, die in einem vorgegebenen Raum angeordnet sind, wobei der Druckerfassungsteil (21) durch einen Schalter ausgebildet ist, der einen wechselseitigen Kontakt der zwei transparenten Elektroden erfasst und dadurch einen Druck durch ein vorgegebenes Bedienobjekt erfasst, und einen Bedienobjekterfassungsteil (13), der konfiguriert ist, um eine Bedienung durch das vorgegebene Bedienobjekt zu erfassen, eine Zustandssteuereinrichtung (11) realisiert, um das Umschalten eines Zustands des Informationsverarbeitungsendgeräts (1) zwischen einem ersten Leistungseinstellungszustand und einem zweiten Leistungseinstellungszustand zu steuern, wobei der zweite Leistungseinstellungszustand eine stärker leistungseinsparende Einstellung als der erste Leistungseinstellungszustand ist,
wobei die Zustandssteuereinrichtung (11) konfiguriert ist, um den Zustand in dem zweiten Leistungseinstellungszustand von dem zweiten Leistungseinstellungszustand auf den ersten Leistungseinstellungszustand umzuschalten, wenn die Eingabebedienung durch den Eingabebedienungsannahmeteil (21) angenommen wird und auch eine Bedienung durch das Bedienobjekt durch den Bedienobjekterfassungsteil (13) erfasst wird,
wobei der Eingabebedienungsannahmeteil (21) auf einer Anzeigefläche eines Anzeigeteils (12) des Informationsverarbeitungsendgeräts (1) ausgebildet ist und konfiguriert ist, um eine Druckbedienung zum Drücken der Anzeigefläche als die Eingabebedienung anzunehmen,
wobei der Bedienobjekterfassungsteil (13) konfiguriert ist, um unter Verwendung eines Berührungsbildschirms eine Bedienung durch das Bedienobjekt mit einer Charakteristik, die einen Elektrizitätsfluss erlaubt, zu erfassen, wobei der Berührungsbildschirm auf einer Anzeigefläche eines Anzeigeteils (12) des Informationsverarbeitungsendgeräts (1) ausgebildet ist und fähig ist, eine Bedienung durch das Bedienobjekt durch eine kapazitive Technologie zu erfassen, und
wobei, nachdem die Druckbedienung durch den Eingabebedienungsannahmeteil (21) angenommen wurde, wenn die Bedienung durch das Bedienobjekt durch den Bedienobjekterfassungsteil erfasst wird, der zweite Leistungseinstellungszustand auf den ersten Leistungseinstellungszustand umgeschaltet wird.

## Revendications

1. Terminal de traitement d'informations (1) comprenant :
un moyen de commande d'état (11) pour commander la commutation d'un état du terminal de traitement d'informations (1) entre un premier état de réglage de puissance et un deuxième état de réglage de puissance, le deuxième état de réglage de puissance étant un réglage plus économe en énergie que le premier état de réglage de puissance ;
une partie d'acceptation d'opération d'entrée (21) configurée pour accepter une opération d'entrée prédéterminée, la partie d'acceptation d'opération d'entrée (21) étant une partie de détection de pression (21) comprenant deux électrodes transparentes qui sont agencées avec un espace prédéterminé, dans lequel la partie de détection de pression (21) est formée par un commutateur qui est configuré pour détecter un contact mutuel des deux électrodes transparentes et configuré pour détecter ainsi une pression par un objet d'opération prédéfini ; et
une partie de détection d'objet d'opération (13) configurée pour détecter une opération par l'objet d'opération prédéfini,
dans lequel le moyen de commande d'état (11) est configuré pour commuter l'état du deuxième état de réglage de puissance au premier état de réglage de puissance quand, dans le deuxième état de réglage de puissance, l'opération d'entrée est acceptée par la partie d'acceptation d'opération d'entrée (21) et également une opération par l'objet d'opération est détectée par la partie de détection d'objet d'opération (13),
la partie d'acceptation d'opération d'entrée (21) est formée sur une surface d'affichage d'une partie d'affichage (12) du terminal de traitement d'informations (1) et configurée pour accepter, comme l'opération d'entrée, une opération de pression pour presser la surface d'affichage,
la partie de détection d'objet d'opération (13) est configurée pour, en utilisant un écran tactile, détecter une opération par l'objet d'opération avec une caractéristique de permission de circulation d'électricité, l'écran tactile étant formé sur une surface d'affichage d'une partie d'affichage (12) du terminal de traitement d'informations (1) et étant capable de détecter une opération par l'objet d'opération par une technologie capacitive, et
après que l'opération de pression est acceptée par la partie d'acceptation d'opération d'entrée (21), quand l'opération par l'objet d'opération est détectée par la partie de détection d'objet d'opération, le deuxième état de réglage de puissance est commuté au premier état de réglage de puissance.

2. Terminal de traitement d'informations (1) selon la revendication 1, dans lequel la partie de détection d'objet d'opération (13) est configurée pour interrompre une détection d'une opération par l'objet d'opération quand l'état est le deuxième état de réglage de puissance, et démarrer la détection d'une opération par l'objet d'opération quand l'opération d'entrée est acceptée par la partie d'acceptation d'opération d'entrée (21) dans le deuxième état de réglage de puissance.

3. Terminal de traitement d'informations (1) selon la revendication 2, dans lequel la partie de détection d'objet d'opération (13) est configurée pour interrompre une détection d'une opération par l'objet d'opération dans un cas où, après que l'opération d'entrée est acceptée par la partie d'acceptation d'opération d'entrée (21) dans le deuxième état de réglage de puissance et une détection d'une opération par l'objet d'opération est démarrée, un temps prédéfini s'écoule sans détection d'une opération par l'objet d'opération.

4. Terminal de traitement d'informations (1) selon l'une quelconque des revendications 1 à 3, dans lequel le moyen de commande d'état (11) est configuré pour ne pas commuter l'état au premier état de réglage de puissance dans un cas où une opération par l'objet d'opération n'est pas détectée par la partie de détection d'objet d'opération (13).

5. Terminal de traitement d'informations (1) selon l'une quelconque des revendications 1 à 4, dans lequel :
le premier état de réglage de puissance est un état de fonctionnement pour fournir une énergie électrique prédéfinie à des composants configurant le terminal de traitement d'informations (1) ; et
le deuxième état de réglage de puissance est un état d'économie d'énergie pour réduire une consommation d'énergie par rapport à l'état de fonctionnement.

6. Terminal de traitement d'informations (1) selon la revendication 5, dans lequel :
l'état d'économie d'énergie a un premier état d'économie d'énergie et un deuxième état d'économie d'énergie, le deuxième état d'économie d'énergie étant un réglage plus économe en énergie que le premier état d'économie d'énergie ; et
le moyen de commande d'état (11) est configuré pour commuter l'état de l'état de fonctionnement au premier état d'économie d'énergie dans un cas où l'objet d'opération n'est pas détecté par la partie de détection d'objet d'opération (13) dans un temps prédéfini après que l'état est commuté du deuxième état d'économie d'énergie à l'état de fonctionnement.

7. Terminal de traitement d'informations (1) selon la revendication 6, dans lequel le moyen de commande d'état (11) est configuré pour commuter l'état du premier état d'économie d'énergie au deuxième état d'économie d'énergie quand un temps prédéfini s'écoule après que l'état est commuté au premier état d'économie d'énergie.

8. Terminal de traitement d'informations (1) selon l'une quelconque des revendications 5 à 7, dans lequel :
l'état de fonctionnement a un premier état de fonctionnement et un deuxième état de fonctionnement, le deuxième état de fonctionnement étant un réglage plus économe en énergie que le premier état de fonctionnement ; et
le moyen de commande d'état (11) est configuré pour :
dans un cas où l'opération d'entrée est acceptée par la partie d'acceptation d'opération d'entrée (21) dans l'état d'économie d'énergie, commuter l'état de l'état d'économie d'énergie au deuxième état de fonctionnement, le deuxième état de fonctionnement étant un état pour fournir de l'énergie électrique à une partie des composants de manière à être en mesure de commuter l'état au premier état de fonctionnement dans un temps plus court qu'un temps pour commuter l'état de l'état d'économie d'énergie au premier état de fonctionnement ;
dans un cas où l'objet d'opération est détecté par la partie de détection d'objet d'opération (13) dans le deuxième état de fonctionnement, commuter l'état du deuxième état de fonctionnement au premier état de fonctionnement ; et
dans un cas où l'objet d'opération n'est pas détecté par la partie de détection d'objet d'opération (13) dans un temps prédéfini après que l'état est commuté au deuxième état de fonctionnement, commuter l'état du deuxième état de fonctionnement à l'état d'économie d'énergie.

9. Terminal de traitement d'informations (1) selon l'une quelconque des revendications 5 à 8, dans lequel :
un des composants est une partie d'affichage (12) ; et
l'état d'économie d'énergie est un état pour rendre l'énergie électrique délivrée à la partie d'affichage (12) inférieure à une énergie électrique délivrée à la partie d'affichage (12) dans l'état de fonctionnement.

10. Terminal de traitement d'informations (1) selon la revendication 9, dans lequel :
l'état de fonctionnement est un état dans lequel de l'énergie électrique est délivrée à la partie d'affichage (12) et la partie d'affichage (12) affiche un écran ; et
l'état d'économie d'énergie est un état dans lequel une alimentation d'énergie électrique à la partie d'affichage (12) est interrompue et la partie d'affichage (12) n'affiche pas un écran.

11. Terminal de traitement d'informations (1) selon l'une quelconque des revendications 5 à 10, dans lequel :
une amplitude d'énergie électrique délivrée dans l'état de fonctionnement est une amplitude d'une consommation d'énergie effective des composants fonctionnant dans l'état de fonctionnement ; et
une amplitude d'énergie électrique délivrée dans l'état d'économie d'énergie est une amplitude d'une consommation d'énergie effective des composants fonctionnant dans l'état d'économie d'énergie.

12. Terminal de traitement d'informations (1) selon l'une quelconque des revendications 1 à 11, dans lequel la partie de détection d'objet d'opération (13) est configurée pour détecter un corps humain comme l'objet d'opération.

13. Terminal de traitement d'informations (1) comprenant :
un moyen de commande d'état (11) pour commander la commutation d'un état du terminal de traitement d'informations (1) entre un premier état de réglage de puissance et un deuxième état de réglage de puissance, le deuxième état de réglage de puissance étant un réglage plus économe en énergie que le premier état de réglage de puissance ;
une partie d'acceptation d'opération d'entrée (21) configurée pour accepter une opération d'entrée prédéterminée, la partie d'acceptation d'opération d'entrée (21) étant une partie de détection de pression (21) comprenant deux électrodes transparentes qui sont agencées avec un espace prédéterminé, dans lequel la partie de détection de pression (21) est formée par un commutateur qui est configuré pour détecter un contact mutuel des deux électrodes transparentes et configuré pour détecter ainsi une pression par un objet d'opération ; et
une partie d'acquisition d'informations de position (221) configurée pour acquérir des informations de position représentant une position dans laquelle l'opération d'entrée est effectuée,
dans lequel le moyen de commande d'état (11) est configuré pour commuter l'état du deuxième état de réglage de puissance au premier état de réglage de puissance quand, dans le deuxième état de réglage de puissance, l'opération d'entrée est acceptée par la partie d'acceptation d'opération d'entrée (21) et également des informations de position acquises par la partie d'acquisition d'informations de position (221) satisfont une condition prédéfinie,
la partie d'acceptation d'opération d'entrée (21) est formée sur une surface d'affichage d'une partie d'affichage (12) du terminal de traitement d'informations (1) et configurée pour accepter, comme l'opération d'entrée, une opération de pression pour presser la surface d'affichage,
la partie d'acquisition d'informations de position (221) est configurée pour, en utilisant un écran tactile (23), acquérir des informations de position d'une région dans laquelle un contact est détecté, et
après que l'opération de pression est acceptée par la partie d'acceptation d'opération d'entrée (21), quand les informations de position représentant une position dans laquelle l'opération d'entrée est effectuée sont acquises par la partie d'acquisition d'informations de position (221), le deuxième état de réglage de puissance et commuté au premier état de réglage de puissance.

14. Terminal de traitement d'informations selon la revendication 13, dans lequel le moyen de commande d'état est configuré pour commuter l'état de l'état d'économie d'énergie à l'état de fonctionnement dans un cas où, dans l'état d'économie d'énergie, l'opération d'entrée est acceptée par la partie d'acceptation d'opération d'entrée (21) et également des informations de position acquises par la partie d'acquisition d'informations de position sont incluses dans une région prédéfinie d'une surface d'affichage d'une partie d'affichage du terminal de traitement d'informations.

15. Procédé de traitement d'informations par un terminal de traitement d'informations (1), le procédé de traitement d'informations comprenant :
l'acceptation d'une opération d'entrée prédéterminée par une partie d'acceptation d'opération d'entrée (21), la partie d'acceptation d'opération d'entrée (21) étant une partie de détection de pression (21) comprenant deux électrodes transparentes qui sont agencées avec un espace prédéterminé, dans lequel la partie de détection de pression (21) est formée par un commutateur qui détecte un contact mutuel des deux électrodes transparentes et détecte ainsi une pression par un objet d'opération prédéfini ;
la détection d'une opération par l'objet d'opération prédéfini ; et
la commutation d'un état du terminal de traitement d'informations (1) d'un deuxième état de réglage de puissance à un premier état de réglage de puissance dans un cas où, dans le deuxième état de réglage de puissance, l'opération d'entrée est acceptée et également une opération par l'objet d'opération est détectée, le deuxième état de réglage de puissance étant un réglage plus économe en énergie que le premier état de réglage de puissance,
dans lequel, comme l'opération d'entrée prédéterminée, une opération de pression pour presser une surface d'affichage d'une partie d'affichage (12) du terminal de traitement d'informations (1) est acceptée,
la détection d'une opération par un objet d'opération prédéfini est effectuée en utilisant un écran tactile et en détectant une opération par l'objet d'opération avec une caractéristique de permission de flux d'électricité, l'écran tactile étant formé sur une surface d'affichage d'une partie d'affichage (12) du terminal de traitement d'informations (1) et étant capable de détecter une opération par l'objet d'opération par une technologie capacitive, et
après que l'opération de pression est acceptée, quand l'opération par l'objet d'opération est détectée, la commutation du deuxième état de réglage de puissance au premier état de réglage de puissance.

16. Programme informatique comprenant des instructions pour amener un terminal de traitement d'informations (1), qui comprend une partie d'acceptation d'opération d'entrée (21) configurée pour accepter une opération d'entrée prédéterminée, la partie d'acceptation d'opération d'entrée (21) étant une partie de détection de pression (21) comprenant deux électrodes transparentes qui sont agencées avec un espace prédéterminé, dans lequel la partie de détection de pression (21) est formée par un commutateur qui détecte un contact mutuel des deux électrodes transparentes et détecte ainsi une pression par un objet d'opération prédéfini et une partie de détection d'objet d'opération (13) configurée pour détecter une opération par l'objet d'opération prédéfini, pour réaliser un moyen de commande d'état (11) pour commander la commutation d'un état du terminal de traitement d'informations (1) entre un premier état de réglage de puissance et un deuxième état de réglage de puissance, le deuxième état de réglage de puissance étant un réglage plus économe en énergie que le premier état de réglage de puissance,
dans lequel le moyen de commande d'état (11) est configuré pour commuter l'état du deuxième état de réglage de puissance au premier état de réglage de puissance quand, dans le deuxième état de réglage de puissance, l'opération d'entrée est acceptée par la partie d'acceptation d'opération d'entrée (21) et également une opération par l'objet d'opération est détectée par la partie de détection d'objet d'opération (13),
la partie d'acceptation d'opération d'entrée (21) est formée sur une surface d'affichage d'une partie d'affichage (12) du terminal de traitement d'informations (1) et configurée pour accepter, comme l'opération d'entrée, une opération de pression pour presser la surface d'affichage,
la partie de détection d'objet d'opération (13) est configurée pour, en utilisant un écran tactile, détecter une opération par l'objet d'opération avec une caractéristique de permission de circulation d'électricité, l'écran tactile étant formé sur une surface d'affichage d'une partie d'affichage (12) du terminal de traitement d'informations (1) et étant capable de détecter une opération par l'objet d'opération par une technologie capacitive, et
après que l'opération de pression est acceptée par la partie d'acceptation d'opération d'entrée (21), quand l'opération par l'objet d'opération est détectée par la partie de détection d'objet d'opération, le deuxième état de réglage de puissance est commuté au premier état de réglage de puissance.
